# EUROPEAN PATENT SPECIFICATION

(11) **EP 2 605 640 B1**
(45) Date of publication and mention of the grant of the patent: **08.04.2015**
(21) Application number: 11746320.8
(22) Date of filing: 16.08.2011
(51) Int. Cl.: A01K 5/02

(54) **ANIMAL FEED DISPENSING APPARATUS AND A SYSTEM FOR DISPENSING ANIMAL FEED**
TIERFUTTERAUSGABEVORRICHTUNG UND SYSTEM ZUR AUSGABE VON TIERFUTTER
APPAREIL DE DISTRIBUTION D'ALIMENTS POUR ANIMAUX ET SYSTÈME DE DISTRIBUTION D'ALIMENTS POUR ANIMAUX

(30) Priority: 16.08.2010 IE 20100511
(43) Date of publication of application: 26.06.2013
(73) Proprietor: Dairymaster, County Kerry (IE)
(72) Inventor: HARTY, Edmond Patrick Senior, County Kerry (IE); HARTY, Edmond Patrick Junior, County Kerry (IE); MULLANE, Liam, County Limerick (IE); MURPHY, Frank, County Kerry (IE); FLEMING, John, County Kerry (IE)
(74) Representative: Gorman, Francis Fergus
(86) International application number: PCT/IE2011/000045
(87) International publication number: WO 2012/023124

(56) References cited:
- EP-A2- 1 236 393
- WO-A2-2010/064224
- CA-A1- 2 150 068
- US-A- 5 778 820
- US-A- 5 867 820

## Description

The present invention relates to animal feed dispensing apparatus, and to a system for dispensing animal feed.

Animal feed dispensing apparatus are known. Typically, such dispensing apparatus are provided for dispensing animal feed to cattle, cows and other livestock. In the feeding of cows, and in particular, recently dried off cows, particularly during pre-calving periods, it is important that the animals should receive a relatively precisely balanced feed which contains suitably matched and balanced energy and mineral ingredients. In general, in order to produce such a matched balance animal feed, pre-mixing of ingredients is necessary, and the pre-mixed ingredients are then placed in a container of a hopper from which appropriate discrete quantities of the pre-mixed feed are dispensed to respective ones of the animals.

However, such dispensers suffer from a number of disadvantages, firstly, since the animal feed is pre-mixed, the ratio of the ingredients within the animal feed are fixed, and accordingly, it is only possible to vary the quantity of the pre-mixed animal feed dispensed to the animals. It is not possible to vary the ratio of the ingredients of the animal feed so dispensed. This is undesirable. Additionally, it is difficult, if not impossible, to track the quantities of the animal feed fed to the respective animals. A further disadvantage of such known dispensers is that it is impossible to know if the correct quantities of the pre-mixed animal feed have been dispensed to the respective animals, and furthermore, a farmer has no way of knowing whether an animal received animal feed or othenarise. This is undesirable.

U.S. Patent Specification No. 5,778,820 of Cornelis van der Lely discloses a combined automatic milking apparatus and an animal feed dispenser. The animal feed dispenser comprises a hopper and a metering mechanism which meter animal feed from the hopper to a feeding trough located beneath the hopper and the metering mechanism. A radio receiver located on a front face of the hopper receives an identification signal which is indicative of the identity of an animal located in the apparatus. The identification signal is transmitted by a transmitter located on a collar around the neck of the animal. A computer stores data relating to specific quantities of animal feed which are to be dispensed to the respective animals, so that on an animal being identified in the apparatus, the metering mechanism is operated to dispense an appropriate amount of the animal feed for the identified animal from the hopper to the feeding trough. A weighing device monitors the weight of feed in the feeding trough, and when the difference between the weight of the feed supplied during a feeding period and that consumed by an animal exceeds a predefined threshold, the computer produces a signal which warns an operator of the possible ill health of the animal.

There is therefore a need for animal feed dispensing apparatus which addresses at least some of the problems of animal feed dispensing apparatus known heretofore.

The present invention is directed towards providing such an animal feed dispensing apparatus and the invention is also directed towards providing a system for dispensing predefined discrete quantities of animal feed to respective animals.

According to the invention there is provided animal feed dispensing apparatus comprising an animal feed dispenser, a means for accessing data containing particulars of at least discrete predefined quantities of animal feed for dispensing to respective animals, an identifying means adapted to determine the identity of an animal approaching the dispenser and to produce an identity signal indicative of the identity of the animal, a dispensing means adapted to dispense a discrete predefined quantity of the animal feed from the dispenser appropriate to the identified animal in response to the identity signal, wherein a monitoring means is provided for monitoring the dispensing means, the monitoring means being responsive to failure of the dispensing means to dispense some or all of the discrete predefined quantity of the animal feed to produce an alert signal, and a communicating means is provided, the communicating means being adapted for two-way communications and to communicate the alert signal to a remote communications device.

In one embodiment of the invention the communicating means comprises a signal transmitting means. Preferably, the communicating means comprises a wireless transmitting means. Advantageously, the communicating means is adapted for communicating at radio wave frequencies.

In another embodiment of the invention the communicating means is adapted for communicating at microwave frequencies. Preferably, the communicating means is adapted for communicating via a mobile phone network. Advantageously, the communicating means is adapted for communicating with a mobile phone. Ideally, the communicating means is adapted to communicate with a mobile phone by text messaging.

In another embodiment of the invention the communicating means is adapted to transmit a predefined text message.

In a further embodiment of the invention the alert signal is transmitted in the form of a predefined text message.

In another embodiment of the invention the communicating means is adapted for communicating via the internet. Preferably, the communicating means is adapted for communicating with a remote computer. Advantageously, the communicating means is adapted for communicating with a remote computer by email messaging.

In another embodiment of the invention the communicating means is adapted for communicating predefined email messages to the remote computer.

In a further embodiment of the invention the alert signal comprises a data signal in the form of an email message.

Preferably, a first storing means is provided for storing data containing the particulars of the discrete predefined quantities of animal feed cross-referenced with the identities of respective animals.

Advantageously, an interface means is provided for interfacing with the first storing means for facilitating inputting of data containing particulars of the discrete predefined quantities of animal feed cross-referenced with the identities of the respective animals.

In another embodiment of the invention the communicating means co-operates with the interface means for downloading the data to the first storing means containing particulars of the discrete predefined quantities of the animal feed cross-referenced with the corresponding identities of the respective animals.

Preferably, the interface means is adapted for communicating through the communicating means with a remote computer for downloading the data containing particulars of the discrete predefined quantities of animal feed cross-referenced with the identities of respective animals.

In one embodiment of the invention the interface means comprises a keypad adapted to facilitate inputting of the data containing particulars of the discrete predefined quantities of animal feed cross-referenced with the identities of the respective animals. Preferably, the keypad is adapted for releasably mounting on the dispenser.

Advantageously, the interface means comprises a visual display screen adapted to display data being entered via the keypad to the first storing means.

Preferably, the keypad and the visual display screen are provided as one integral unit releasably mounted on the dispenser.

In one embodiment of the invention the means for accessing the data containing particulars of the at least discrete predefined quantities of animal feed for dispensing to respective animals comprises a control means, and the control means is responsive to the identity signal produced by the identifying means for controlling operation of the dispensing means to dispense the discrete predefined quantity of the animal feed for the identified animal.

In another embodiment of the invention the control means is adapted for reading data containing particulars of the discrete predefined quantity of the animal feed from the first storing means in response to the identity signal from the identifying means.

In another embodiment of the invention the control means is responsive to the alert signal produced by the monitoring means for operating the communicating means to communicate the alert signal with the remote communications device.

Preferably, the control means is adapted to control the dispensing means to dispense not more than a predefined number of the corresponding discrete predefined quantities of animal feed to each animal during a predefined time period.

Advantageously, the control means is adapted to control the dispensing means to dispense not more than one of the corresponding discrete predefined quantities of animal feed to each animal during the predefined time period.

In another embodiment of the invention a second storing means is provided, the second storing means being adapted to store data containing the identity of each animal to which the corresponding discrete predefined quantity of the animal feed is dispensed during each predefined time period.

Preferably, the control means is adapted to operate the communicating means to communicate to a remote communications device a report comprising data stored in the second storing means containing the identity of each animal to which a corresponding discrete predefined quantity of the animal feed is dispensed during each predefined time period.

Advantageously, the second storing means is adapted to store particulars of the quantity of animal feed dispensed to each animal cross-referenced with the identity of the corresponding animal, and the control means is adapted for operating the communicating means for communicating a report comprising data from the second storing means containing particulars of the quantities of animal feed dispensed to the respective animals cross-referenced with the identity of the animals during each predefined time period to a remote communications device.

Advantageously, the control means is adapted for communicating data to a remote communications device a report comprising data containing the identity of each animal to which a discrete predefined quantity of the animal feed was not dispensed during each predefined time period.

Ideally, the control means is adapted to communicate to one or more reports comprising data containing particulars of the dispensing of the animal feed to the animals during each predefined time period at the end of the corresponding predefined time period.

In one embodiment of the invention the predefined period is a twenty-four-hour period.

Preferably, each predefined time period commences just after midnight of one day and ends at midnight of the next immediately following day.

In one embodiment of the invention the identifying means comprises a reading means for reading a radio frequency signal emitted by a radio frequency identity tag located on an animal.

In another embodiment of the invention the data containing particulars of the discrete predefined quantities of animal feed contains particulars of ingredients and the proportions thereof for the respective discrete predefined quantities of the animal feed.

Preferably, the second storing means is adapted for storing data containing particulars of the proportions of the ingredients in each discrete predefined quantity of the animal feed dispensed to each animal during each predefined period cross-referenced with the identity of the animal.

Advantageously, the control means is adapted for communicating to a remote communications device, the one or more reports comprising data containing the proportions of the ingredients dispensed in each discrete predefined quantity of the animal feed dispensed to each animal cross-referenced with the identity of the animal during each predefined time period.

Preferably, the dispenser comprises at least one primary container defining a hollow interior region for storing one of the ingredients of the animal feed, and the dispensing means comprises a primary metering means located in each primary container for metering the ingredient from the container.

Advantageously, the monitoring means comprises a primary monitoring means associated with each primary metering means for monitoring the corresponding one of the primary metering means.

In one embodiment of the invention at least two primary containers for storing respective ingredients of the animal feed are provided.

Preferably, each primary metering means comprises an electrically powered metering means. Advantageously, each primary metering means comprises a primary auger driven by a corresponding primary electrically powered motor.

In one embodiment of the invention each primary auger comprises an elongated primary conveying tube defining a conveying bore of circular transverse cross-section extending therethrough, and an auger flight rotatable in the conveying bore for urging an ingredient therethrough from an upstream end of the conveying bore to a downstream end thereof, an outlet opening being formed in the primary conveying tube towards the upstream end thereof, and an outlet opening being provided from the primary conveying tube adjacent the downstream end thereof, and a closure element adapted for selectively isolating the primary auger from the hollow interior region of the corresponding primary container.

Preferably, the primary conveying tube of each primary auger is located in the hollow interior region of the corresponding primary container with the inlet opening adapted to accommodate the ingredient from the primary container into the primary conveying tube under gravity.

Advantageously, the closure element of each primary auger is adapted to co-operate with a portion of the corresponding primary container for isolating the corresponding primary auger from the hollow interior region of the corresponding primary container.

In another embodiment of the invention the closure element of each primary auger comprises an elongated closure tube having a bore of circular transverse cross-section extending therethrough, the primary conveying tube being located in and extending through the bore of the closure tube, and a communicating opening being formed in the closure tube, the closure tube being rotatable relative to the primary conveying tube between an open state with the communicating opening aligned with the inlet opening of the corresponding primary conveying tube communicating the conveying bore of the primary conveying tube with the hollow interior region of the corresponding primary container, and a closed state co-operating with the portion of the corresponding primary container isolating the corresponding primary auger from the hollow interior region of the corresponding primary container.

Preferably, the closure tube of each primary auger when in the closed state isolates the primary conveying tube from the hollow interior region of the corresponding primary container.

In another embodiment of the invention the outlet opening of each primary auger is located externally of the corresponding primary container.

Preferably, each primary auger comprises an auger shaft on which the auger flight is rigidly carried, the auger shaft extending through the conveying bore of the primary conveying tube, and a discharge element is rigidly carried on the auger shaft adjacent the downstream end thereof external of the primary conveying tube, the discharge element being adapted to receive the ingredient from the outlet opening of the corresponding primary conveying tube, the discharge element of each primary auger having a discharge outlet through which the ingredient is discharged from the corresponding primary auger.

Advantageously, an operating means extends from the closure element of each primary auger externally of the corresponding primary container for selectively operating the closure element between the open and closed states.

Ideally, each primary monitoring means comprises a sensing means for monitoring the corresponding primary metering means to detect overloading or under-loading of the primary metering means. Preferably, the sensing means of each monitoring means comprises a current sensor for monitoring electrical current drawn by the primary electrical motor of the corresponding primary metering means.

In another embodiment of the invention each primary monitoring means comprises a counting means for counting the number of revolutions of a shaft of one of the primary motor and the primary auger of the corresponding primary metering means.

In a further embodiment of the invention each primary container comprises a primary level sensing means adapted for detecting the level of the ingredient in the corresponding primary container having dropped to a corresponding predefined lower limit.

In one embodiment of the invention the dispenser comprises a storage hopper for storing an ingredient of a first one of the primary containers, the storage hopper being adapted to feed the ingredient therefrom into the first one of the primary containers.

Preferably, the storage hopper is located above the first primary containers, and the ingredient in the storage hopper is fed therefrom to the container by gravity.

In another embodiment of the invention a storage silo is provided for storing an ingredient for a second one of the primary containers, and a delivery means is provided for delivering the ingredient from the storage silo to the second primary container.

Preferably, the control means is responsive to a signal from the primary level sensing means of the second primary container being indicative of the level of the ingredient in the second primary container falling to a predefined lower level for operating the delivery means to deliver the ingredient from the storage silo to the second primary container.

In one embodiment of the invention the delivery means comprises a secondary metering means for metering and dispensing a predefined quantity of the ingredient of the storage silo to the second primary container. Preferably, the secondary metering means comprises a secondary metering auger. Advantageously, the secondary metering auger comprises a secondary auger powered by a secondary electrically powered motor.

Preferably, the control means is responsive to the signal produced by the primary level sensing means of the first primary container being indicative of the level of ingredient in the first primary container having dropped to the predefined lower limit for producing a first reorder message, and for controlling the communicating means to communicate the first reorder message to a remote communications device.

In another embodiment of the invention the storage silo comprises a detecting means for detecting the quantity of ingredient in the storage silo having dropped to a predefined lower limit, and for producing a signal indicative of the quantity of the ingredient in the storage silo having dropped to the predefined lower limit. Preferably, the control means is responsive to the signal produced by the detecting means of the storage silo being indicative of the quantity of the ingredient in the storage silo having dropped to the predefined lower limit for producing a second reorder message, and for controlling the communicating means to communicate the second reorder message to a remote communications device.

In one embodiment of the invention the control means is adapted for controlling the communicating means to communicate the first reorder message to a remote communications device of a supplier of the ingredient.

In another embodiment of the invention the control means is adapted for controlling the communicating means to communicate the second reorder message to a remote communications device of a supplier of the ingredient.

In a further embodiment of the invention a third storing means is provided for storing the first and second reorder messages as pre-formed messages for communicating by the communicating means to a remote communications device.

Preferably, the control means is responsive to the signals from the primary level sensing means of the first primary container and from the detecting means of the storage silo for selecting the appropriate pre-formed message from the third storing means.

Preferably, each pre-formed reorder message is stored as an SMS text message.

Advantageously, each pre-formed reorder message is stored as a pre-formatted message suitable for communication via email.

In one embodiment of the invention each reorder message includes particulars of the dispenser to which the reordered ingredient is to be delivered. Advantageously, each reorder message includes particulars of the farmer who owns the dispenser. Advantageously, each reorder message contains particulars of the ingredient to be reordered and one or more of the volume and weight of the ingredient to be reordered. Ideally, each reorder message comprises an address of the supplier to which the reorder message is to be communicated. Preferably, each reorder message comprises a mobile telephone number of the supplier to which the reorder message is to be communicated. Advantageously, each reorder message comprises an email address of the supplier from which the ingredient is to be reordered.

In one embodiment of the invention the alert signal alerting to the failure of the dispensing means is stored in the third storing means as a pre-formed SMS text message. Preferably, the alert signal alerting to the failure of the dispensing means is stored in the third storing means as a pre-formed message suitable for communication via email.

In one embodiment of the invention the third storing means is adapted for storing pre-formatted messages for use in communicating the one or more reports comprising data containing particulars of the dispensing of the animal feed to the animals to a remote communications device.

Preferably, each pre-formatted message is stored as an SMS text message.

Advantageously, each pre-formatted message is stored in a formatted form suitable for communication via email.

In one embodiment of the invention the first primary container is adapted for storing an ingredient in concentrate form.

In another embodiment of the invention the second primary container is adapted for storing an ingredient in bulk form.

Advantageously, the dispenser comprises a feed accommodating element for receiving each dispensed discrete predefined quantity of the animal feed for presenting the dispensed discrete predefined quantity of the animal feed to a corresponding animal.

The invention also provides a system for dispensing discrete predefined quantities of animal feed to respective animals, the system comprising an animal feed dispensing apparatus according to the invention, and a remote communications device adapted to communicate with the animal feed dispensing apparatus via the communicating means thereof.

In one embodiment of the invention the remote communications device comprises a remote computer, the remote computer being adapted to store data containing particulars of the discrete predefined quantities of the animal feed to be fed to the respective animals, cross-referenced with the corresponding ones of the animals.

Preferably, the remote computer is adapted to store data containing particular of the respective animals, said data comprising one or more of the dates of birth of the respective animals, the groups in which the respective animals reside, the body conditions score of the respective animals, the dried off calving dates of the respective animals, and the health status of the respective animals. Advantageously, the remote computer is adapted to receive and store data communicated by the communicating means of the animal feed dispensing apparatus containing particulars of the identity of the animals detected by the identifying means as having approached the dispenser, and particulars of the discrete quantities of the animal feed dispensed by the dispensing means for the animals and cross-referenced with the animals for which the discrete quantities of the animal feed were dispensed.

Advantageously, the remote computer is adapted for preparing a report on the discrete predefined quantities of animal feed fed to the respective animals, cross-referenced with the corresponding ones of the respective animals during each predefined time period over an extended period of time.

In one embodiment of the invention the extended period of time is approximately one week.

In another embodiment of the invention the extended period of time is approximately two weeks.

In a further embodiment of the invention the extended period of time is approximately one month.

Preferably, the remote communications device comprises a mobile telephone adapted for receiving an SMS text message.

In one embodiment of the invention one or both of the control circuit and the remote computer is programmed to prepare a report comprising data containing particulars of the animal feed dispensed to each one of the animals which are lactating during the lactating period of the animal and/or at the end of the lactating period of the animal.

In another embodiment of the invention one or both of the control circuit and the remote computer is programmed to prepare a report comprising data containing particulars of the animal feed dispensed to each one of the animals which are in their dry period, during the dry period and/or at the end of the dry period.

In a further embodiment of the invention one or both of the control circuit and the remote computer is programmed to prepare a report comprising data containing particulars of the animal feed dispensed to each one of the animals during the lifetime of the animal.

The advantages of the invention are many. A particularly important advantage of the invention is that an alert is produced by the apparatus to the farmer or any other authorised person in the event that the monitoring means detects failure of the dispensing means to dispense some or all of a discrete predefined quantity of the animal feed to an animal. This allows immediate corrective action to be taken by the farmer or other such authorised person. A further advantage of the invention is that the dispensing apparatus is capable of monitoring the discrete predefined quantities of animal feed which is dispensed to the animals, and accordingly, communicates data to a farmer or other authorised person, which identifies animals to which animal feed has been dispensed, and identifies those animals to which animal feed has not been dispensed. The apparatus also ensures that a discrete predefined quantity of animal feed is dispensed to each animal only once during a predefined time period, which typically is a time period of twenty-four hours. Another advantage of the invention is that by virtue of the fact that the levels and quantities of animal feed in the dispenser are monitored, the apparatus automatically reorders ingredients as they are required, without the need for intervention by a farmer or other authorised person.

Additionally, by virtue of the fact that the primary monitoring means of each primary container of the dispenser monitors the corresponding primary metering means of that primary container, the farmer or other authorised person is advised by virtue of the alert signal in the event that either all or some of a discrete predefined quantity of animal feed has not been dispensed to an animal, and furthermore, the farmer is advised of the animal for which either all or some of the animal feed has not been dispensed, and thus, corrective action can be taken to ensure that that animal is provided with the missing ingredient or the missing discrete predefined quantity of the animal feed as appropriate. Another advantage of the dispensing apparatus according to the invention is that it facilitates traceability of feed so that feed fed to each individual animal can be traced.

A further advantage of the invention is that the primary metering augers may be removed from and replaced in the respective primary containers without the need to empty the primary containers. This allows the primary metering augers to be readily easily removed and replaced for servicing, maintenance, cleaning or for other servicing or replacing.

The invention will be more clearly understood from the following description of a preferred embodiment thereof, which is given by way of example only, with reference to the accompanying drawings, in which:

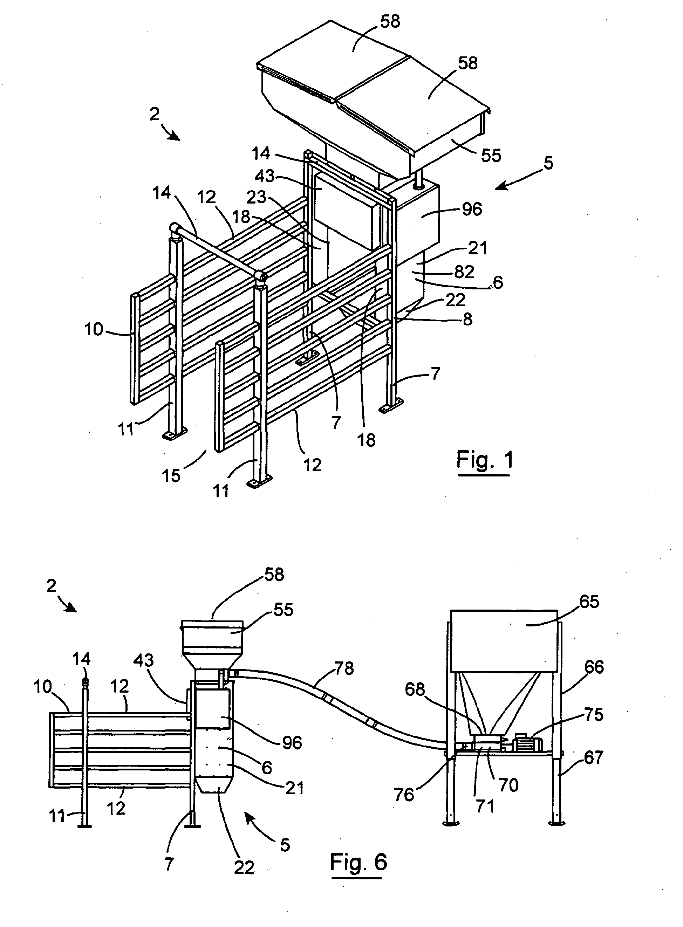

Fig. 1 is a perspective view of animal feed dispensing apparatus according to the invention,

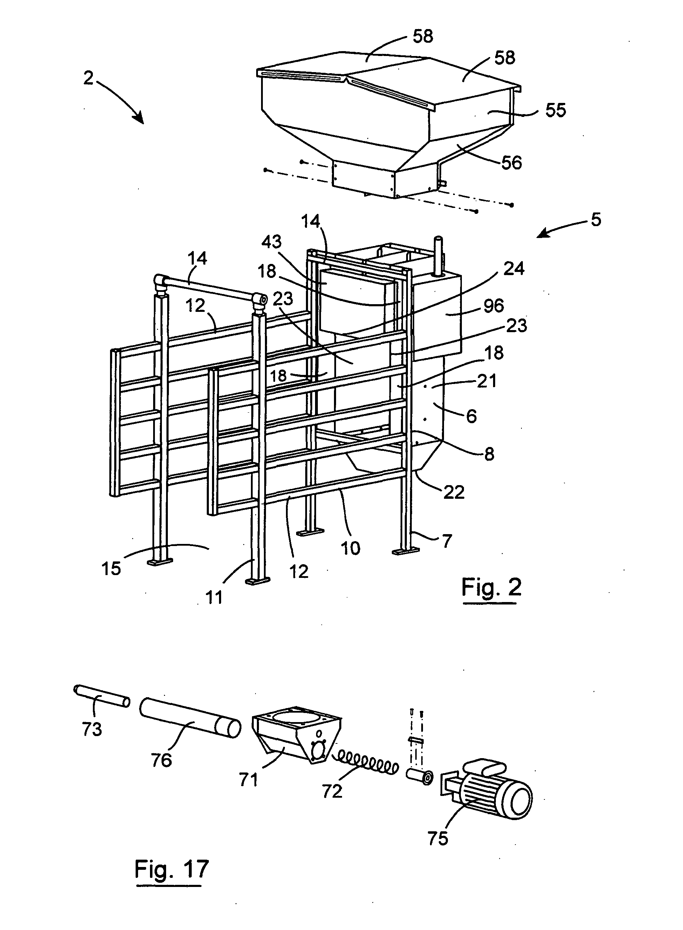

Fig. 2 is a partly exploded perspective view of the animal feed dispensing apparatus of Fig. 1,

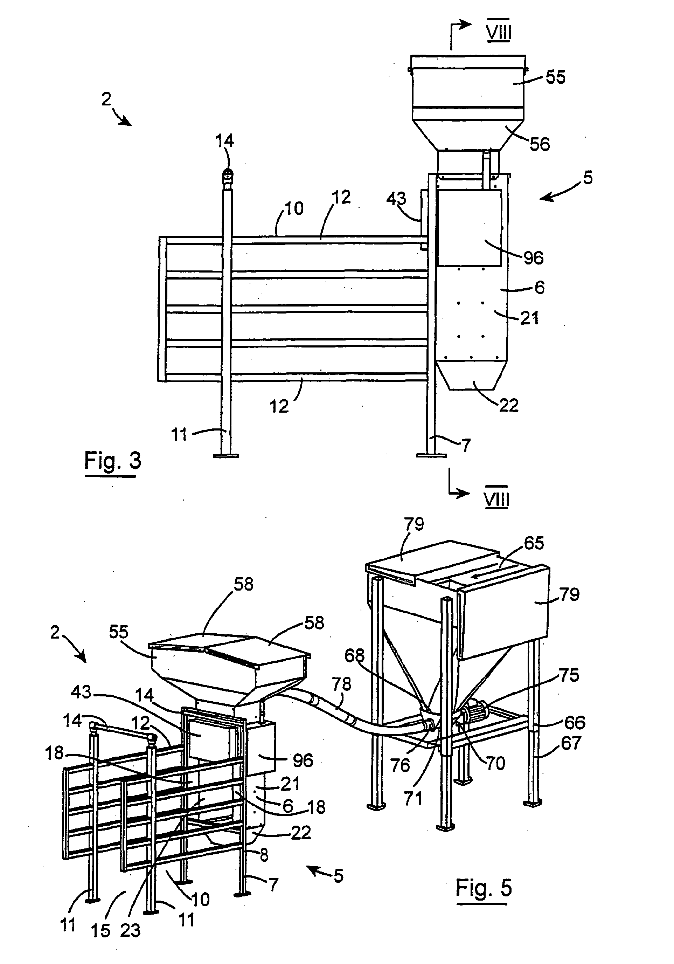

Fig. 3 is a side elevational view of the animal feed dispensing apparatus of Fig. 1,

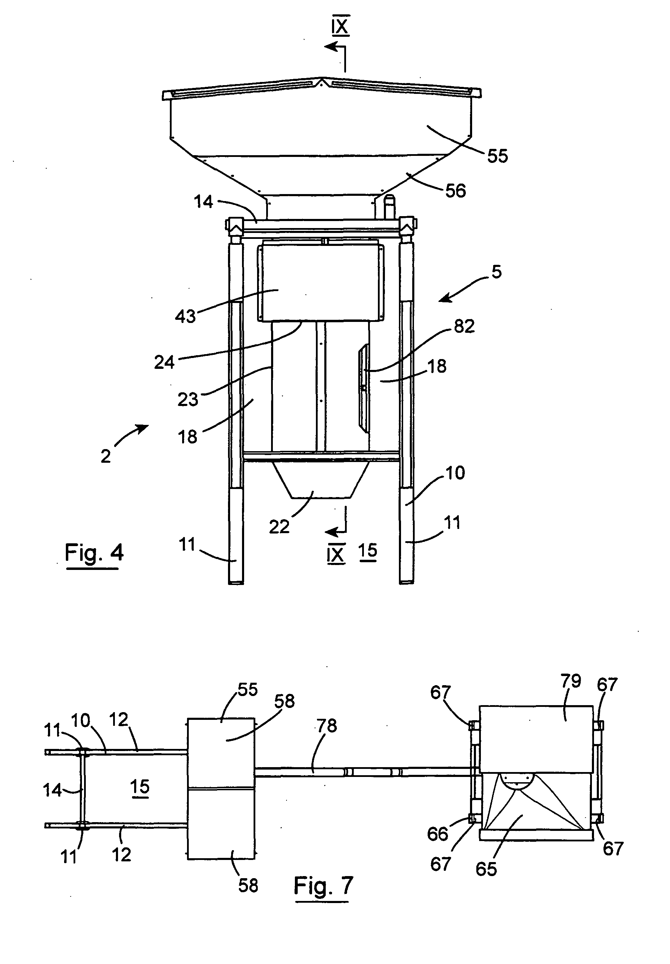

Fig. 4 is a front elevational view of the animal feed dispensing apparatus of Fig. 1.
Fig. 5 is a perspective view of the animal feed dispensing apparatus of Fig. 1 coupled to a storage silo,
Fig. 6 is a side elevational view of the animal feed dispensing apparatus of Fig. 1 and the storage silo of Fig. 5,
Fig. 7 is a top plan view of the animal feed dispensing apparatus of Fig. 1 and the storage silo of Fig. 5,

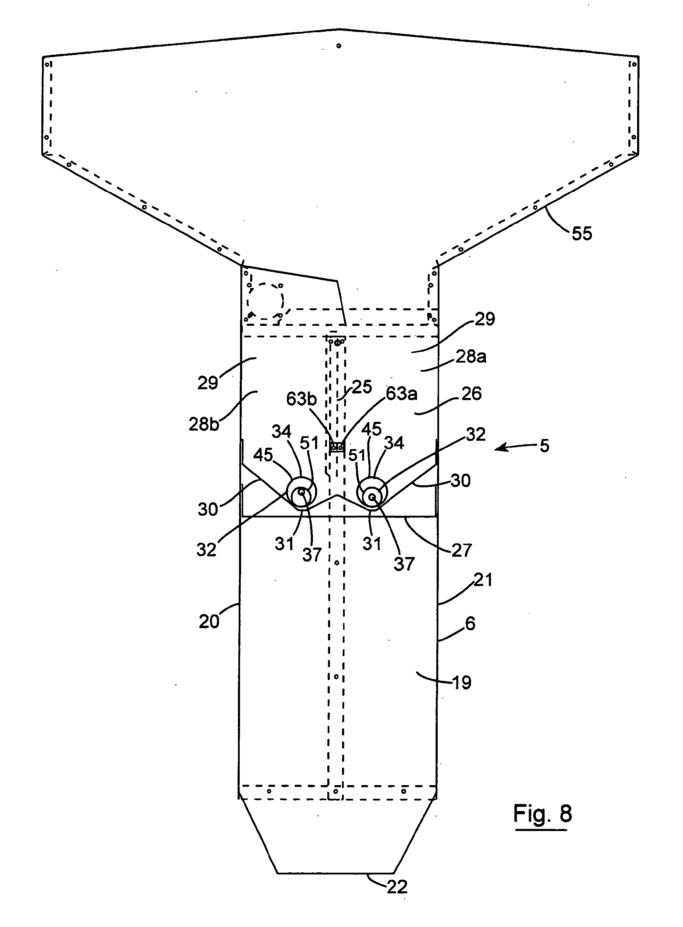

Fig. 8 is a partly cross-sectional front elevational view of the animal feed dispensing apparatus of Fig. 1 on the line VIII-VIII of Fig. 3,

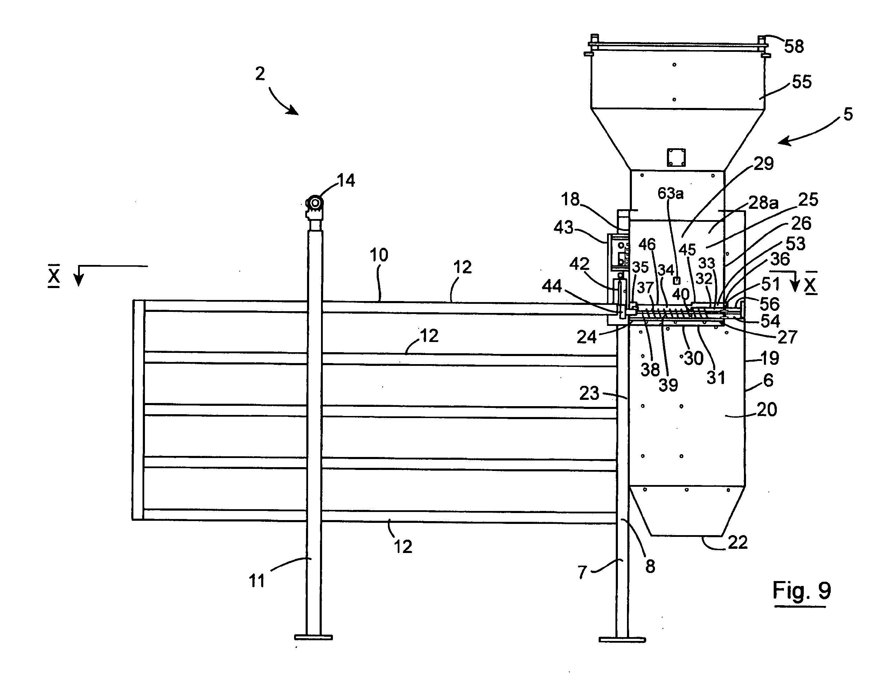

Fig. 9 is a cross-sectional side elevational view of the animal feed dispensing apparatus of Fig. 1 on the line IX-IX of Fig. 4,

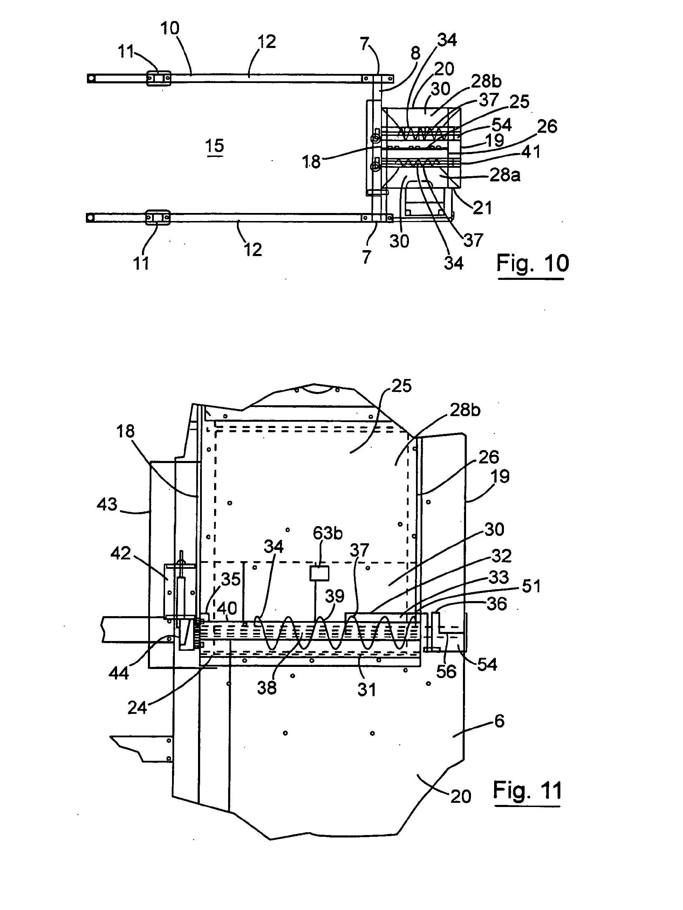

Fig. 10 is a cross-sectional top plan view of the animal feed dispensing apparatus of Fig. 1 on the line XI-XI of Fig. 10,
Fig. 11 is an enlarged cross-sectional side elevational view of a portion of the animal feed dispensing apparatus of Fig. 1,
Fig. 12 is a perspective view of a portion of the animal feed dispensing apparatus of Fig. 1.
Fig. 13 is a perspective view of the portion of Fig. 12 of the animal feed dispensing apparatus of Fig. 1 illustrating the portion in a different state.
Fig. 14 is an exploded perspective view of part of the portion of Fig. 12 of the animal feed dispensing apparatus of Fig. 1,
Fig. 15 is an exploded perspective view of a detail of the portion of Fig. 12 of the animal feed dispensing apparatus of Fig. 1,

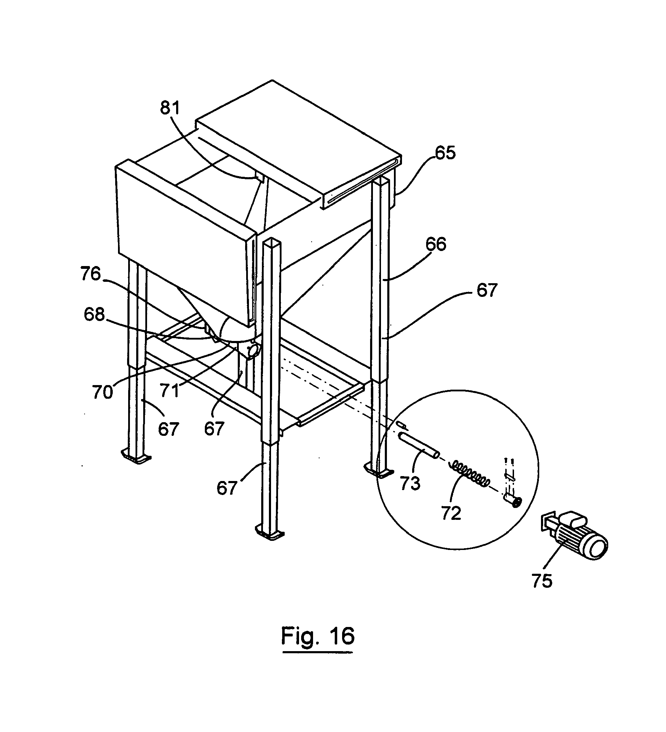

Fig. 16 is an exploded perspective view of the storage silo of Fig. 5,
Fig. 17 is an exploded perspective view of a detail of the storage silo of Fig. 5, and
Fig. 18 is a block representation of a system also according to the invention for dispensing discrete predefined quantities of animal feed to animals comprising the animal feed dispensing apparatus of Fig. 1.

Referring to the drawings, there is illustrated a system according to the invention, indicated generally by the reference numeral 1, for dispensing discrete predefined quantities of animal feed to respective animals, for example, animals of a herd, or a group of animals or the like. The system 1 in particular is suitable for dispensing discrete predefined quantities of animal feed to cattle, cows, and in particular, dried off cows during the pre-calving period, although needless to say, the system 1 is suitable for dispensing discrete predefined quantities of animal feed to any type of animals, including sheep, goats and the like. In particular, the system 1 is adapted to dispense a specific discrete predefined quantity of animal feed to each animal of the herd or group, in which the proportions of the respective ingredients in each discrete predefined quantity of animal feed is specific to each animal.

The system 1 comprises animal feed dispensing apparatus, also according to the invention and indicated generally by the reference numeral 2, for dispensing the discrete predefined quantities of animal feed, and a remote communications device, which may be a computer 3 or a mobile phone 4 with which the apparatus 1 communicates as will be described in more detail below.

The dispensing apparatus 2 comprises an animal feed dispenser, indicated generally by the reference numeral 5, which comprises a housing 6 mounted on a pair of spaced apart upstanding rear ground engaging members 7 which form a rear end 8 of an entry pen 10 for accommodating animals individually to the dispenser 5. The entry pen 10 comprises a pair of spaced apart upstanding front ground engaging members 11 which are joined to corresponding ones of the rear ground engaging members 7 by side members 12. Respective top cross members 14 join the two rear ground engaging members 7 to each other and the two front ground engaging members 11 to each other. The entry pen 10 defines an entry passageway 15 between the front and rear ground engaging members 7 and 11, and the side members 12 for accommodating the animals one at a time to the dispenser 5.

The housing 6 of the dispenser 5 comprises a front wall 18 and a spaced apart rear wall 19, which are joined by spaced apart side walls 20 and 21. The rear wall 19 and side walls 20 and 21 extend upwardly from a dish-shaped base 22. The dish-shaped base 22 forms an animal feed accommodating means on which an appropriate discrete predefined quantity of the animal feed is presented to each animal as will be described below. An opening 23 is defined between the side walls 20 and 21 and between a lower edge 24 of the front wall 18 and the base 22. The opening 23 accommodates the muzzle of an animal between the side walls 20 and 21 to the dish-shaped base 22.

A partition wall 25 extends parallel to the side walls 20 and 21 from the front wall 18 and to an inner rear wall 26 to form with the side walls 20 and 21, the front wall 18 and the inner rear wall 26 a pair of primary containers 28, namely, a first primary container 28a and a second primary container 28b, each of which define a corresponding hollow interior region 29 for holding respective ingredients of the animal feed. The inner rear wall 26 extends between the side walls 20 and 21 and is spaced apart from the rear wall 19, and extends downwardly and terminates in a lower edge 27 at a level substantially corresponding to the level of the lower edge 24 of the front wall 18. Both of the ingredients are in particulate form. One of the ingredients is a mineral and is in concentrate form, while the other ingredient is an energy supplement and is in bulk form. In this embodiment of the invention the first primary container 28a is adapted for storing the concentrate ingredient, while the second primary container 28b is adapted for storing the bulk ingredient of the animal feed. Trough shaped bases 30 extend from the front wall 18 to the rear wall 19 and between the partition wall 25 and the respective side walls 20 and 21 to close the lower ends of the first and second primary containers 28a and 28b. Each trough shaped base 30 inclines downwardly from the partition wall 25 and from the corresponding one of the side walls 20 and 21 to a central trough 31 extending from the front wall 18 to the rear wall 19.

A dispensing means, in this embodiment of the invention respective primary metering means, namely, respective primary metering augers 34 are located within the hollow interior regions 29 of the primary containers 28 for metering the corresponding ingredient of the animal feed from the primary containers 28 onto the dish-shaped base 22. Each primary metering auger 34 is located in the trough 31 of the trough shaped base 30 of the corresponding primary container 28.

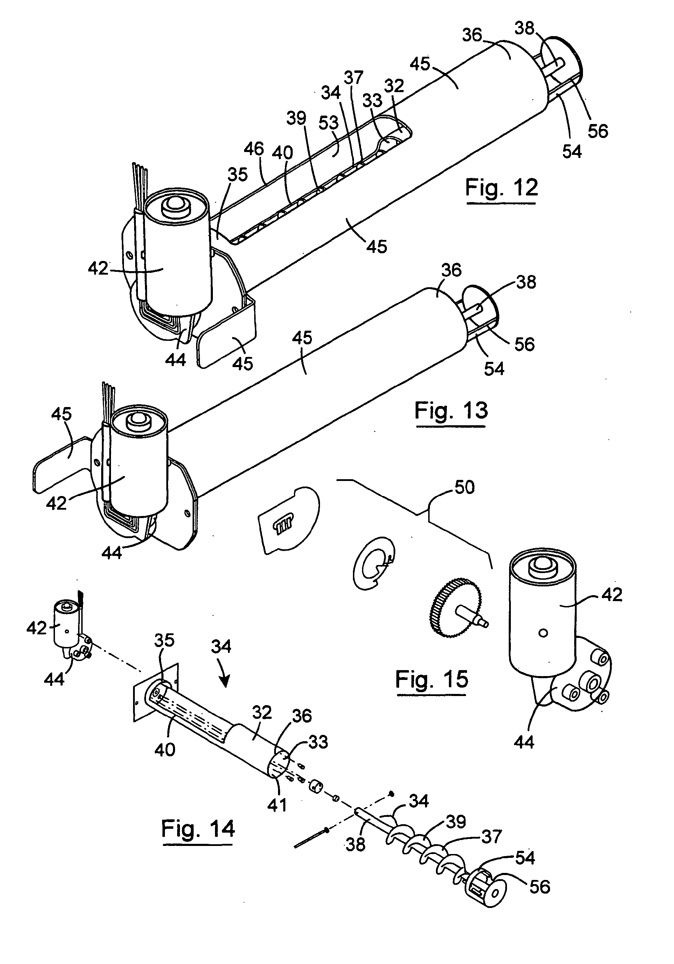

Referring in particular to Figs. 12 to 15, each primary metering auger 34 comprises an elongated a primary conveying tube 32 of circular transverse cross-section having a conveying bore 33 also of circular transverse cross-section extending therethrough from an upstream end 35 to a downstream end 36. A primary auger 37 comprising an auger shaft 38 and an auger flight 39 extending around the auger shaft 38 is rotatably mounted in the conveying bore 33 of the primary conveying tube 32 and extends the length of the primary conveying tube 32. An upwardly facing longitudinally extending elongated inlet opening 40 is formed in the primary conveying tube 32 towards the upstream end 35 thereof for communicating the conveying bore 33 with the hollow interior region 29 of the corresponding primary container 28. The primary conveying tube 32 terminates at its downstream end 36 in an outlet opening 41 through which ingredient from the hollow interior region 29 of the corresponding primary container 28 is discharged into a downstream discharge element 54. The discharge element 54 is of tubular construction and is rigidly carried on the auger shaft 38 adjacent the downstream end thereof, and rotates with the auger shaft 38. A discharge outlet 56 is formed in the discharge element 54 through which the ingredient is discharged as the auger shaft 38 rotates to fall under gravity to the dish-shaped base 22.

Primary drive means for driving the primary augers 37 comprise respective electrically powered primary drive motors 42 which are located in a sub housing 43 mounted on the front wall 18 of the housing 6. Each electrically powered drive motor 42 drives the corresponding primary auger 37 through a corresponding right-angled gearbox.

A closure element, in this embodiment of the invention an elongated closure tube 45 of circular transverse cross-section having a bore 53 extending therethrough, also of circular transverse cross-section accommodates the corresponding primary conveying tube 32 in the bore 51 for selectively isolating the inlet opening 40 to the corresponding primary metering auger 34 from the hollow interior region of the corresponding container. An elongated longitudinally extending communicating opening 46 is formed in the closure tube 45 and is of length substantially corresponding to the length of the inlet opening 40 of the corresponding primary conveying tube 32. The closure tube 45 is rotatably mounted in the front wall 18 and in the inner rear wall 26, and is rotatable around the primary conveying tube 32 through an angle of approximately 180° from an open state illustrated in Fig. 12 with the communicating opening 46 aligned with the inlet opening 40 of the primary conveying tube 32 for communicating the conveying bore 33 with the hollow interior region 29 of the corresponding primary container 28 and a closed state illustrated in Fig. 13 with the communicating opening 46 facing downwardly and abutting the trough 31 of the trough shaped base 30 of the corresponding primary container 28, thereby isolating the primary metering auger 34 from the hollow interior region 29 of the corresponding primary container 28.

An operating lever 47 is attached to the closure tube 45 and extends through the front wall 18 of the housing 6 into the first sub-housing 43 in order to rotate the closure tube 45 between the open and closed states for facilitating removal of the primary metering auger 34 or the primary auger 37 from the corresponding primary container 28 for servicing, maintenance, cleaning or replacing thereof without the need to first empty the ingredient from the corresponding primary container 28.

The closure tube 45 of each primary auger 34 is located in the trough 31 of the corresponding primary container 28 and the closure tube extends the length of the trough 31 from the front wall 18 to and through an opening 51 in the inner rear wall 26 terminating at a location spaced apart from the rear wall 19 of the housing 6. The primary conveying tube 32 extends the length of the trough 31 in the bore 53 of the closure tube 45 from the front wall 18 of the housing 6 to the downstream end of the closure tube 45. The auger shaft 38 extends outwardly through the outlet opening 41 and rigidly carries the discharge element 54 clear of the downstream end of the closure element 45 between the closure element 45 and the rear wall 19. The primary conveying tube 32 of each primary auger 34 is located in the corresponding closure tube 45 with the inlet opening 40 facing a generally upwardly direction for communicating with the hollow interior region 29 of the corresponding primary container 28 through the communicating opening 46 of the corresponding closure tube 45 for receiving ingredient therefrom into the conveying bore 33 of the primary conveying tube 32.

The closure tube 45 is rotatably mounted in the trough 31 and is rotatable from the open state illustrated in Fig. 12 with the communicating opening 46 facing upwardly and communicating the inlet opening 40 of the corresponding primary conveying tube 32 with the hollow interior region 29 of the corresponding primary container 28, and a closed state illustrated in Fig. 13 with the communicating opening 46 facing downwardly into the trough 31 of the corresponding primary container 28. The closure element 45 is located in the trough 31 of the corresponding primary container 28, so that the trough 31 co-operates with the closure tube 45 to close the communicating opening 46 when the closure tube 45 is in the closed state, thus isolating the primary metering auger 34 from the hollow interior region 29 of the corresponding primary container 28 for facilitating removal of the primary auger 37.

Ingredients metered out by the primary metering augers 34 through the corresponding discharge outlets 56 collect in the dish-shaped base 22 of the housing 6 which forms the animal feed accommodating means for accommodating the metered discrete predefined quantities of the ingredients metered out from the first and second primary containers 28a and 28b by the respective primary metering augers 34 in order to present the discrete predefined quantities of the animal feed to the animals. The opening 23 which is defined between the side walls 20 and 21 and the lower edge 24 of the front wall 18 and the base 22 is sized to accommodate the muzzle of an animal into the dish-shaped base 22 to allow the animal to consume the dispensed discrete predefined quantity of the animal feed from the dish-shaped base 22.

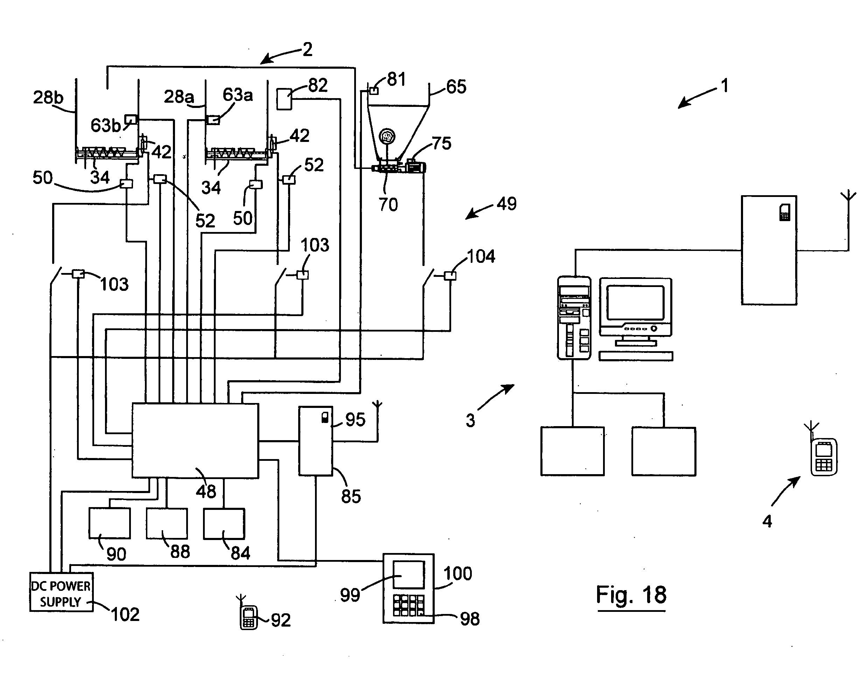

Each primary auger 35 is adapted to meter out a predefined quantity for each revolution of the auger shaft 36. A control means, in this embodiment of the invention a microprocessor 48 in a control circuit 49, which will be described in more detail below with reference to Fig. 18, controls the operation of each primary metering auger 34 for metering out predefined quantities of the ingredients in the respective primary containers 28 for producing the discrete predefined quantities of the animal feed for the respective animals. The controlling of the primary metering augers 34 is described in more detail below.

A primary monitoring means for monitoring the quantity of ingredients metered out from the respective primary containers 28 by the corresponding primary metering augers 34 comprises an encoder 50 located in the gearbox 44 of each primary metering auger 34 for counting the number of revolutions of the auger shaft 38 of the corresponding primary metering auger 34 for in turn monitoring the quantity of the ingredient metered by the corresponding metering auger 34 of the corresponding primary container 28. Signals from the encoders 50 of the respective primary metering augers 34 are read by the microprocessor 48 for determining the quantity of the ingredient metered out from the corresponding primary container 28 as will be described below.

Primary sensing means, which in this embodiment of the invention comprise current sensors 52, monitor the current drawn by the respective primary drive motors 42 of the primary metering augers 34. Signals read from the current sensors 52 indicative of the current drawn by each of the primary drive motors 42 are read by the microprocessor 48 for determining if an overload or an under-load condition occurs in the primary metering augers 34. An under-load condition in either of the primary metering augers 34 could be indicative of the ingredient in the corresponding primary container 28 becoming caked and forming a bridge above the closure tube 45 of the corresponding primary metering auger 34, which would thereby result in failure of the corresponding primary metering auger 34 to meter out the ingredient from the corresponding primary container 28. On the other hand, an overload condition in either of the primary metering augers 34 could be the result of a blockage in the primary metering auger 34 or the ingredient in the corresponding primary container 28 being caked in the primary metering auger 34, which would similarly result in failure of the corresponding primary metering auger 34 to dispense the ingredient from the corresponding primary container 28.

A storage hopper 55 which is mounted above the housing 6 of the dispenser 5 forms an extension of the first primary container 28a for storing the ingredient of the first primary container 28a. Ingredient in the storage hopper 55 is fed under gravity to the first primary container 28a.

Primary level sensing means, namely, a first primary level detector 63a is located in the first primary container 28a and a second primary level detector 63b is located in the second primary container 28b for detecting when the level of the ingredients in the respective first and second primary containers 28a and 28b drops to respective predefined lower levels. Each primary level detector 63 comprises a capacitive level detector, and the primary level detectors 63 are located in the hollow interior regions 29 of the corresponding primary containers at the appropriate level corresponding to the predefined lower level of the corresponding primary container 28. Signals are read from the first and second primary level detectors 63a and 63b by the microprocessor 48 for determining when the level of the respective ingredients in the first and second primary containers 28a and 28b have dropped to the respective predefined lower levels as will be described below.

A storage silo 65 for storing a back-up quantity of the bulk ingredient for the second primary container 28b is mounted in a framework 66 having telescoping legs 67 for adjusting the height of the storage silo 65. The storage silo terminates in a lower downwardly directed outlet 68. A delivery means comprising a delivery auger 70 having an auger housing 71 is coupled to the storage silo 65 adjacent the outlet 68 and communicates with the storage silo 65 through the outlet 68.

The delivery auger 70 comprises an auger flight 72 mounted on an auger shaft 73 which is drive by an electrically powered secondary drive motor 75. The auger shaft 73 and the auger flight 72 extend through the auger housing 71 and extend into a conveying tubular outlet 76 for delivering ingredient from the storage silo 65 through the conveying tubular outlet 76 and in turn into a conveying conduit 78 which delivers the ingredient from the storage silo 65 into the second primary container 28b.

The secondary drive motor 75 is driven under the control of the microprocessor 48 in response to a signal from the second primary level detector 63b in the second primary container 28b being indicative of the level of the ingredient in the second primary container 28b having fallen to the predefined lower level for driving the delivery auger 70 to recharge the second primary container 28b. The delivery auger 70 is driven under the control of the microprocessor 48 for a predefined number of revolutions of the auger shaft 73 in order to recharge the second primary container 28b with a predefined quantity of the ingredient from the storage silo 65. A pair of lids 79 close the storage silo 65.

A detecting means provided by a secondary detector 81 is located in the storage silo 65 for detecting the quantity of the ingredient in the storage silo 65 and for producing a signal indicative of the quantity of the ingredient in the storage silo 65. The signal from the second secondary detector 81 is also read by the microprocessor 48 for a purpose to be described below.

An identifying means for determining the identity of an animal approaching the dispenser 5 comprises a radio frequency identifying detector 82 which is mounted on the side wall 21 of the housing 6 within the housing 6 for detecting and reading the identity of the animal from a radio frequency identity tag (not shown) which would normally be located in one of the ears of the animal. Such radio frequency identity tags will be well known to those skilled in the art, and are commonly referred to as RFID tags. The radio frequency identity detector 8 is located on the side wall 21 of the housing 6 so that as the animal enters its muzzle between the side walls 20 and 21 through the opening 23, signals from the RFID tag are read by the radio frequency identifying detector 82. The microprocessor 48 reads signals from the radio frequency identifying detector 82 indicative of the identity of the approaching animal in order to determine the identity of the animal, so that the discrete predefined quantity of animal feed, and the proportions of the ingredients thereof specific to the approaching animal can be determined.

In this embodiment of the invention the control circuit 49 comprises a first memory means, namely, a suitable first electronic memory 84 which may be provided separately of the microprocessor 48 or integrally therewith. The first electronic memory 84 is adapted to store data containing particulars of the sizes of the discrete predefined quantities of animal feed for the respective animals, together with particulars of the proportions of the ingredients from the first and second primary containers 28a and 28b cross-referenced with data indicative of the identity of the animals to which discrete predefined quantities of animal feed are to be dispensed from the dispenser 5.

However, while in this embodiment of the invention the sizes of the discrete predefined quantities of animal feed and the proportions of the ingredients thereof cross-referenced with the respective animals is stored in the control circuit 49 of the dispenser 5, it will be appreciated that the data containing particulars of the sizes of the discrete predefined quantities of the animal feed and the proportions of the ingredients thereof cross-referenced with the respective animals could be stored remotely of the dispenser and accessed remotely by the microprocessor 48. Irrespective of where the data containing particulars of the sizes of the discrete predefined quantities of the animal feed and the proportions of the ingredients thereof cross-referenced with the respective animals is stored, the microprocessor 48 acts as a means for accessing the data containing the particulars of the sizes of the discrete predefined quantities of the animal feed and the proportions of the ingredients thereof cross-referenced with the respective animals from the first electronic memory 84.

The microprocessor 48 is programmed so that on reading a signal from the radio frequency identifying detector 82 which is indicative of the identity of an animal approaching the dispenser 5, the microprocessor reads the size of the discrete predefined quantity of the animal feed to be dispensed to that animal from the first electronic memory 84 and also reads the proportions of the respective ingredients in the first and second primary containers 28a and 28b to make up the discrete predefined quantity of the animal feed for that animal. The microprocessor 48 then operates the two primary metering augers 34 for metering out the appropriate amount of the first and second ingredients from the first and second primary containers 28a and 28b in order to make up the discrete predefined quantity of animal feed, which is dispensed by the primary metering augers 34 onto the dish-shaped base 22 of the dispenser 5 to be consumed by the approaching animal.

The microprocessor 48 is programmed to read signals from the encoders 50 of the respective primary metering augers 34 of the first and second primary containers 28a and 28b during operation of the primary metering augers 34 in order to determine the quantity of the respective ingredients metered out from the first and second primary containers 28a and 28b by the primary metering augers 34. The microprocessor 48 is also programmed to read signals from the respective current sensors 52 of the primary metering augers 34 during operation of the primary metering augers 34 in order to determine if an overload or under-load condition exists in either of the primary metering augers 34.

In the event that the signals read from either of the encoders 50 is indicative of either of the primary metering augers 34 rotating an insufficient amount in order to dispense the appropriate quantity of the ingredient from the corresponding one of the first and second primary containers 28a and 28b, thus indicating an insufficient amount of either or both of the ingredients from the primary containers 28, or the signal from either of the current sensors 52 being indicative of an under-load or overload condition in either of the primary metering augers 34, the microprocessor 48 generates an alert signal. The alert signal is indicative of failure of the dispensing means to dispense some or all of the discrete predefined quantity of the animal feed for the approaching animal.

A communicating means, in this embodiment of the invention comprising a communicating system 85 in the control circuit 49 is adapted as will be described below to transmit the alert signal to a remote communications device, which in this embodiment of the invention is the mobile phone 4 of a farmer or other authorised person responsible for the husbandry of the animals.

The microprocessor 48 is programmed to only dispense one discrete predefined quantity of animal feed to each animal during a predetermined time period, which in this embodiment of the invention is a twenty-four-hour period commencing just after midnight of each day and continuing to midnight of the immediately following day, at which time the next predefined time period commences. In other words, the microprocessor 48 is programmed to dispense only one discrete predefined quantity of the animal feed to each animal during each twenty-four-hour period. Accordingly, if an animal approaches the dispenser 5 through the entry pen 10 more than once in each twenty-four-hour period, on the second and subsequent approaches by that animal to the dispenser 5 during the twenty-four-hour period, no further discrete predefined quantities of the animal feed will be dispensed to that animal.

A second storing means, in this embodiment of the invention a second electronic memory 88 in the control circuit 49 is provided for storing data determined by the microprocessor 48 from signals read from the encoders 50 and the current sensors 52 which contains particulars of the sizes of the discrete predefined quantities of animal feed together with the proportions of the ingredients from the first and second primary containers dispensed to the respective animals during each twenty-four-hour period and cross-referenced with the respective animals. On completion of the dispensing of each discrete predefined quantity of animal feed to the corresponding animal, the microprocessor 48 from signals read from the encoders 50 and the current sensors 52 determines the size of the discrete predefined quantity of animal feed dispensed to the animal, and the proportions of the respective ingredients from the primary containers 28 and writes the data containing these particulars of the discrete predefined quantity of the animal feed cross-referenced with the identity of the corresponding animal to the second electronic memory 88.

The microprocessor 48 is programmed to transmit a text message to the mobile phone 4 or an email to the computer 3, or both through the communicating system 85 at the end of each predefined twenty-four-hour time period, which contains a report of the sizes of the discrete predefined quantities of the animal feed dispensed to the respective animals during the twenty-four-hour period cross-referenced with the identity of the animals, together with the proportions of the ingredients from the primary containers 28 of each discrete predefined quantity of animal feed. The report also contains particulars of the animals which did not approach the dispenser 5 during that predefined twenty-four-hour time period.

A third storing means, namely, a third electronic memory 90 also located in the control circuit 49 stores a plurality of selectable pre-formed and pre-formatted messages which are selectable by the microprocessor 48 for communicating data to the mobile phone 4 and the computer 3. The messages are suitable for transmission as text messages or emails or both. A first one of the pre-formatted text messages is an alert message for transmission to the mobile phone 4 of the farmer. The alert text message advises the farmer as to which of the primary metering augers 34 dispensed an insufficient quantity of the ingredient or alternatively was operating in an overload or under-load state, and the alert text message also includes the identity of the animal to which the discrete predefined quantity of the animal feed was being dispensed.

A second one of the pre-formatted text message stored in the third electronic memory 90 is provided for producing the report at the end of each twenty-four-hour period which contains the particulars of the sizes of the quantities of the animal feed together with the proportions of the ingredients thereof dispensed to the animals and cross-referenced to the identities of the respective animals during that twenty-four-hour period. The microprocessor 48 is programmed to insert the relevant data from the second electronic memory 88 into the second pre-formatted text message to produce the report on the feeding of the animals. The messages prepared by the microprocessor 48 from the pre-formatted messages may be transmitted as text messages over a mobile phone network to the farmer's mobile phone 4 or as an email over the internet to the remote computer 3 of the farmer.

Third pre-formed and/or pre-formatted text messages which are reorder messages are stored in the third electronic memory 90 and are suitable for reordering the ingredients of the respective first and second primary containers 28a and 28b. One of the reorder messages is provided for reordering the first ingredient and the other of the reorder messages is for ordering the second ingredient. The respective reorder messages include the identity and quantity of the corresponding ingredient to be ordered, the identity of the dispenser 5 and the address at which it is located, and the address, phone number and/or email address of the ingredient supplier to which the order is to be directed. The microprocessor 48 in response to the signal received from either the first primary level detector 63a or the secondary detector 81 being indicative of the level of the ingredient in the corresponding one of the first container 28a and the storage silo 65, respectively, having fallen to the corresponding predefined lower level, which is the level at which the corresponding ingredient is to be reordered, selects the appropriate one of the pre-formatted reorder text messages, and operates the communicating system 85 to transmit the selected reorder message to a mobile phone 92 or a computer (not shown) of the supplier of the ingredient. A copy of the reorder message is also transmitted to either the mobile phone 4 or the computer 3 of the farmer so that he is aware that the relevant ingredient has been reordered.

The communicating system 85 comprises a SIM card 95 and is operable under the control of the microprocessor 48 for transmitting the selected pre-formatted text messages as SMS text messages selected from the third electronic memory 90 by the microprocessor 48 over a mobile phone network to either the mobile phone 4 of the farmer or other authorised person or the mobile phone 92 of a supplier. The communicating system 85 is also adapted to communicate over the internet by email with the farmer's computer 3 or a computer of a supplier of the ingredients. The communicating system 85 is also adapted to communicate with the computer 3 of the farmer for downloading other information and data from the farmer's computer 3 or the farmer's mobile phone 4 and for uploading data from the dispenser to the farmer's computer 3 and/or the farmer's mobile phone 4.

The control circuit 49 which includes the microprocessor 48, the first, second and third electronic memories 84, 88 and 90 and the communicating system 85 are located in a second sub-housing 96 of the dispenser 5 which is attached to the side wall 21 of the housing 6.

An interface means for inputting data to the first electronic memory 84 comprises a keypad 98 and a visual display screen 99 in a console 100 which is adapted to be releasaby coupled to the second sub-housing 96 for releasably electrically coupling the keypad 98 and the visual display screen 99 to the microprocessor 48. The microprocessor 48 is adapted for reading data inputted through the keypad 98. The data which is typically inputted through the keypad 98 contains particulars of the sizes of the discrete predefined quantities of the animal feed to be dispensed to the respective animals together with the proportions of the ingredients for the respective discrete predefined quantities of the animal feed cross-referenced with the identities of the respective animals to which the discrete predefined quantities of the animal feed are to be dispensed. The microprocessor 48 on reading the data being inputted through the keypad 98 writes the data to the first electronic memory 84.

Additionally, data containing particulars of the sizes of the discrete predefined quantities of the animal feed together with the portions of the ingredients thereof for the respective animals cross-referenced with the identities of the respective animals may be downloaded by the microprocessor 48 from the computer 3 of the farmer and written by the microprocessor 48 to the first electronic memory 84. In which case, the data containing particulars of the sizes of the discrete predefined quantities of the animal feed together with the proportions of the ingredients thereof to be dispensed to the respective animals cross-referenced with the identity of the respective animals would be stored in the computer 3 of the farmer and would be transmitted in a pre-formatted email stored in a pre-formatted message in the computer 3 and would be transmitted as an email via the internet to the communicating system 85.

A power supply, which in this embodiment of the invention is a battery powered DC power supply 102 powers the control circuit 49 as well as the primary and secondary drive motors 42 and 75. Power is supplied to the primary and secondary drive motors 42 and 75 from the DC power supply 102 through corresponding relays 103 and 104, respectively, under the control of the microprocessor 48.

In this embodiment of the invention the first electronic memory 84 of the control circuit is also adapted to store the dates of birth of the respective animals, particulars of the group of animals or herd of animals to which each animal belongs, particulars of the body condition scores (BCS) of the respective animals, the dates on which the respective animals were dried off (ceased to be milked), the calving dates of the respective animals and particulars of the health of the animal, as well as the pregnancy status and lactating status of the respective animal. This data may be inputted through the keypad 98 of the console 100 or may be downloaded from the computer 3 of the farmer where it is also stored. Needless to say, other data relating to each animal may be stored in the first electronic memory 84, such as the weight, age and other such data relevant to the animals. The microprocessor 48 may be programmed to compute revised sizes of the discrete predefined quantities of the animal feed for the respective animals based on any or all of the stored data in respect of the animals stored in the first electronic memory 84.

In this embodiment of the invention the computer 3 of the farmer is programmed to prepare reports on respective ones of the animals which are lactating both during and at the end of the lactating periods of the respective animals. Each report prepared for each lactating animal comprises data which contains particulars of the animal feed dispensed to that lactating animal, and the particulars of the animal feed dispensed to that lactating animal contains particulars of the quantity of the animal feed and the proportions of the ingredients contained in each discrete quantity of animal feed dispensed to that animal on the respective days during the period for which the report is prepared. Additionally, the computer 3 of the farmer is programmed to prepare similar reports in respect of each of the animals which are in their dry period both during and at the end of the dry period, and the computer 3 of the farmer is programmed to prepare a full report comprising similar data to that prepared for the lactating animals during the entire lifetime of each animal. These reports are prepared at appropriate periodic times during the relevant lactating period, the relevant dry period and during the life of the animals, as well as at the end of the lactating period and the dry period, and on death or removal of an animal from the particular group of animals. These reports prepared by the computer 3 of the farmer for lactating animals, animals in the dry period and during the life of the animals are prepared from the data transmitted from the microprocessor 48 of the dispenser 5 through the communicating system 85 thereof to the computer 3 of the farmer.

It is also envisaged that the microprocessor 48 of the dispenser 5 may be programmed to produce similar reports in respect of lactating animals, animals in their dry period and during the life of the animal which would be similar to those produced by the computer 3 of the farmer.

In use, initially data containing the particulars of the discrete predefined quantities of the animal feed together with the proportions of the ingredients thereof to be dispensed to the respective animals which is cross-referenced with the animals is downloaded to the first electronic memory 84 of the dispenser 5 from the computer 3 of the farmer, or alternatively is entered into the first electronic memory 84 through the keypad 98, in both cases under the control of the microprocessor 48. The microprocessor 48 reads signals outputted by the radio frequency identity detector 82, and on the radio frequency identity detector 82 detecting an animal approaching the dispenser 5 through the passageway 15 of the entry pen 10, the microprocessor determines the identity of the approaching animal. On determining the identity of the approaching animal, the microprocessor 48 reads the data from the first electronic memory 84 which contains particulars of the size of the discrete predefined quantity of the animal feed together with the proportions of the ingredients in the first and second primary containers 28a and 28b to be dispensed to the approaching animal.

The microprocessor 48 then operates the primary metering augers 34 to meter the appropriate amounts of the ingredients from the first and second primary containers 28a and 28b in order to produce the discrete predefined quantity of the animal feed. The metered quantities of the ingredients from the first and second primary containers 28a and 28b are dispensed into the dish-shaped base 22 of the housing 6 for consumption by the approaching animal.

During operation of the metering augers 34, the microprocessor 48 reads signals from the encoders 50 and the current sensor 52 in order to determine the quantities of the ingredients metered out from the first and second primary containers 28a and 28b, and for determining if an overload or under-load condition existed in the primary metering augers 34 during operation thereof. On the microprocessor 48 determining that neither an overload or an under-load condition existed during operation of the primary metering augers 34 and also on determining that the quantities of the ingredients metered out from the first and second primary containers 28a and 28b by the primary metering augers 34, the microprocessor 48 stores data containing particulars of the size of the discrete predefined quantity of the animal feed dispensed to the approaching animal together with the proportions of the ingredients from the first and second primary containers 28a and 28b contained in the discrete predefined quantity of the animal feed in the second electronic memory 88, and this data is cross-referenced with the identity of the approaching animal.

On the other hand, if the microprocessor 48 determines that an overload or an under-load condition existed during operation of the primary metering augers 34 or the quantities of the ingredients from either of the first and second primary containers 28a and 28b fell short of the respective appropriate amounts, the microprocessor selects the first pre-formatted alert text message from the third electronic memory 90 and inserts data identifying the reason for the alert and the identity of the animal for which the animal feed was to be dispensed. The alert text message is then transmitted to the farmer's mobile phone 4 and/or the farmer's computer 3 alerting the farmer to the malfunctioning of the dispenser 5.

The microprocessor 48 reads signals from the second primary level detector 63b, and in the event of the signal from the second primary level detector 63b being indicative of the level of the ingredient in the second primary container 28b falling to the predefined lower level, the microprocessor 48 operates the delivery auger 70 to recharge the second primary container 28b with the ingredient from the storage silo 65.

The microprocessor 48 also reads the signals from the first primary level detector 63a and from the secondary detector 81, and on the microprocessor determining from signals from the first primary level detector 63a being indicative of the level of the ingredient in the first primary container 28a being below a predefined lower level, the microprocessor selects the appropriate reorder message from the third electronic memory 90 for reordering the ingredient for the first primary container 28a, which is then transmitted to the mobile phone 92 or a computer (now shown) of the appropriate supplier. Similarly, on the signal from the secondary detector 81 being indicative of the level of ingredient in the storage silo 65 falling to the predefined lower limit, the microprocessor 48 selects the appropriate reorder message from the third electronic memory 90 and transmits the reorder message to the relevant supplier.

At the end of each twenty-four-hour period the microprocessor 48 selects the second pre-formatted message from the third electronic memory 90 and prepares the report from data stored in the second electronic memory 88 which is incorporated into the second message read from the third electronic memory 90. The microprocessor 48 transmits the full report to the mobile phone 4 or the computer 3 or both of the farmer comprising data which contains particulars of the identity of the animals to which discrete predefined quantities of the animal feed have been dispensed, together with the sizes of the respective discrete predefined quantities of the animal feed and the proportions of the ingredients in the first and second primary containers 28a and 28b contained in the discrete predefined quantities of the animal feed which have been fed to the respective animals, and the report also comprises data containing particulars of the identities of the animals to which no discrete predefined quantities of animal feed have been dispensed.

Additionally, if desired, reports may be compiled by the computer 3 of the farmer at periodic intervals, for example, at the end of each week or the end of each month, which combines the data which has been received by the computer 91 from the dispenser 5 at the end of each twenty-four-hour period.

It is envisaged that the messages transmitted under the control of the microprocessor 48 from the dispenser 5 may be in any other suitable format besides an SMS text message, an email message or the like. For example, the messages may be formatted as instant messaging or may be formatted using other messaging technologies. The messages may also be adapted for transmission to a pager or any other suitable receiving device.

While the primary metering means have been described as comprising primary metering augers, any other suitable metering means may be provided for metering the ingredients from the containers. For example, the metering may be carried out by weighing means or by any other suitable means. It will also be appreciated that while the delivery auger has been described as being operated to deliver a predefined quantity of the ingredient from the storage silo to the second primary container, the delivery auger could be operated until the quantity of the ingredient reached a predefined upper level in the second primary container. Needless to say, any other suitable conveying means besides a delivery auger may be provided for delivering the ingredient from the storage silo to the second primary container. Any other suitable storing means besides a storage silo may be provided, and it is also envisaged that other suitable storing means besides a storing hopper for storing the ingredient of the first primary container may be provided. Indeed, it is envisaged in certain cases that the storing hopper may be replaced by a storage silo for storing the ingredient of the first primary container, and a suitable conveying means would be provided for conveying the ingredient from the storage silo to the first primary container.

While the dispenser has been described as comprising only two primary containers, it is envisaged that the dispenser may be provided with any number of containers from one upwards. Indeed, it is envisaged that the dispenser may contain many more than two containers for respective ingredients, and each container would be provided with a corresponding primary metering means and a corresponding monitoring means.

It is also envisaged that one or more of the containers may be adapted to hold ingredients in liquid form.

The relays through which the power supply is applied to the motors of the primary metering augers and the delivery augers may be any suitable type of relay, either mechanical or solid state.

It is also envisaged that instead of the microprocessor 48 being programmed to dispense only one discrete predefined quantity of the animal feed to each animal over the predefined time period of twenty-four hours, it is envisaged that the microprocessor may be programmed to dispense more than one discrete quantity of animal feed to each animal over the predefined twenty-four-hour period, for example, the microprocessor may be programmed to dispense two or three corresponding discrete predefined quantities of the animal feed to each animal over the twenty-four-hour period, one of the discrete predefined quantities of the animal feed being dispensed in the morning, another at noon, and a third in the evening.

It is also envisaged that the microprocessor 48 may be programmed so that the system according to the invention may be used to carry out feed palatability testing. Palatability testing requires checking the frequency with which an animal is prepared to eat a feed, and the quantity of feed it is prepared to eat. By appropriately configuring the microprocessor of the dispenser according to the invention, this data would be readily collectable and would be collectable for each animal. However, in order to collect the data, a weigh means or some other means for detecting the actual quantity of each discrete predefined quantity of animal feed consumed by the animal would be required. Such a weigh means or detecting means could be located in the dished base 22. The production of palatability testing data would be of significant advantage in that palatability testing could be carried out on different farms on which one or more dispensers according to the invention are installed.

While the system according to the invention has been described as comprising a dispenser with its own in-built microprocessor, and a remote mobile phone and/or computer, it will be appreciated that the dispenser could be adapted to operate independently of the remote computer and thus could act as a stand-alone unit.

It is also envisaged that the dispenser and the microprocessor could be configured and programmed to provide information on feed and ingredient usage to a feed supplier which would facilitate routing and schedule of feed deliveries. This information on feed usage would be transmitted to the feed supplier either by SMS text messaging or by any other communicating means.

It is also envisaged that the system and/or dispenser may be used in conjunction with traceability, and in which case, each batch of the ingredients loaded into the storage hopper and the storage silo would be provided with an identity number, and a radio frequency identity tag. The radio frequency identity tag would then be read by a suitable radio frequency identity reader which would be provided on the storage hopper and the storage silo. The signals from the radio frequency identity readers would be read by the microprocessor, which would then cross-reference the identity of the ingredients with the discrete quantities of the animal feed dispensed to the animals on the respective different days which would be cross-referenced with the animals. This data would then be transmitted with the other data being transmitted at the end of each twenty-four-hour period to the mobile phone or the computer of the farmer. Accordingly, with this data stored in the computer of the farmer, the identity of the feed dispensed to the animals could be readily traced back to a specific day on which the animals were fed with the respective ingredients of the respective discrete predefined quantities of the animal feed.

It is envisaged that a teat spraying system may also be provided in the entry passage through the entry pen to the dispenser which would provide for spraying of the animal's teats. The teat spraying system would be controlled by the microprocessor 48, and on the identity of an animal in the entry passageway 15 having been determined, the microprocessor would read from the first electronic memory the appropriate quantity and type of spray to be sprayed onto the teats of the animal in the entry passageway. This data relating to the spraying of the animals would be pre-loaded into the first electronic memory either through the keypad or downloaded from the farmer's computer 3. Containers containing the appropriate liquids for producing the sprays and suitable spraying pumps and nozzles would also be provided.

## Claims

1. Animal feed dispensing apparatus comprising an animal feed dispenser (5), a means (48) for accessing data containing particulars of at least discrete predefined quantities of animal feed for dispensing to respective animals, an identifying means (84) adapted to determine the identity of an animal approaching the dispenser (5) and to produce an identity signal indicative of the identity of the animal, a dispensing means (34) adapted to dispense a discrete predefined quantity of the animal feed from the dispenser (5) appropriate to the identified animal in response to the identity signal, **characterised in that** a monitoring means (50) is provided for monitoring the dispensing means (34), the monitoring means (50) being responsive to failure of the dispensing means (34) to dispense some or all of the discrete predefined quantity of the animal feed to produce an alert signal, and a communicating means (85) is provided, the communicating means (85) being adapted for two-way communications and to communicate the alert signal to a remote communications device (4).

2. Animal feed dispensing apparatus as claimed in Claim 1 **characterised in that** the communicating means (85) comprises a wireless transmitting means (85).

3. Animal feed dispensing apparatus as claimed in Claim 1 or 2 **characterised in that** a first storing means (84) is provided for storing data containing the particulars of the discrete predefined quantities of animal feed cross-referenced with the identities of respective animals.

4. Animal feed dispensing apparatus as claimed in Claim 3 **characterised in that** an interface means is provided for interfacing with the first storing means (84) for facilitating inputting of data containing particulars of the discrete predefined quantities of animal feed cross-referenced with the identities of the respective animals, the interface means being adapted for communicating through the communicating means (85) with a remote computer for downloading the data containing particulars of the discrete predefined quantities of animal feed cross-referenced with the identities of respective animals.

5. Animal feed dispensing apparatus as claimed in any preceding claim **characterised in that** the means (48) for accessing the data containing particulars of the at least discrete predefined quantities of animal feed for dispensing to respective animals comprises a control means (48), and the control means (48) is responsive to the identity signal produced by the identifying means (82) for controlling operation of the dispensing means (34) to dispense the discrete predefined quantity of the animal feed for the identified animal.

6. Animal feed dispensing apparatus as claimed in Claim 5 **characterised in that** the control means (48) is responsive to the alert signal produced by the monitoring means (50) for operating the communicating means (85) to communicate the alert signal with the remote communications device (4).

7. Animal feed dispensing apparatus as claimed in Claims 5 or 6 **characterised in that** the control means (48) is adapted to control the dispensing means (34) to dispense not more than a predefined number of the corresponding discrete predefined quantities of animal feed to each animal during a predefined time period.

8. Animal feed dispensing apparatus as claimed in Claim 7 **characterised in that** a second storing means (88) is provided, the second storing means (88) being adapted to store data containing the identity of each animal to which the corresponding discrete predefined quantity of the animal feed is dispensed during each predefined time period, and the control means (48) is adapted to operate the communicating means (85) to communicate to a remote communications device (4) a report comprising data stored in the second storing means (88) containing the identity of each animal to which a corresponding discrete predefined quantity of the animal feed is dispensed during each predefined time period.

9. Animal feed dispensing apparatus as claimed in Claim 8 **characterised in that** the data containing particulars of the discrete predefined quantities of animal feed contains particulars of ingredients and the proportions thereof for the respective discrete predefined quantities of the animal feed, and the second storing means (88) is adapted for storing data containing particulars of the proportions of the ingredients in each discrete predefined quantity of the animal feed dispensed to each animal during each predefined period cross-referenced with the identity of the animal.

10. Animal feed dispensing apparatus as claimed in any preceding claim **characterised in that** the dispenser (5) comprises at least two primary containers (28) defining a hollow interior region (29) for storing respective ones of the ingredients of the animal feed, the dispensing means (34) of each primary container (28) comprising a primary metering means (34) located in the primary container (28) for metering the ingredient from the primary container (28), and the monitoring means (50) comprises a primary monitoring means (50) associated with each primary metering means (34) for monitoring the corresponding one of the primary metering means (34).

11. Animal feed dispensing apparatus as claimed in Claim 10 **characterised in that** each primary metering means (34) comprises a primary auger (34) driven by a corresponding primary electrically powered motor (42), each primary auger (34) comprising an elongated primary conveying tube (32) defining a conveying bore (33) of circular transverse cross-section extending therethrough, and an auger flight (39) rotatable in the conveying bore (33) for urging an ingredient therethrough from an upstream end (35) of the conveying bore (33) to a downstream end (36) thereof, an inlet opening (40) being formed in the primary conveying tube (32) towards the upstream end (35) thereof, an outlet opening (41) being provided from the primary conveying tube (32) adjacent the downstream end (36) thereof, and a closure element (45) adapted for selectively isolating the primary auger (34) from the hollow interior region (29) of the corresponding primary container (28), the primary conveying tube (32) of each primary auger (34) being located in the hollow interior region (29) of the corresponding primary container (28) with the inlet opening (40) adapted to accommodate the ingredient from the primary container (28) into the primary conveying tube (32) under gravity.

12. Animal feed dispensing apparatus as claimed in Claim 10 or 11 **characterised in that** each primary container (28) comprises a primary level sensing means (63) adapted for detecting the level of the ingredient in the corresponding primary container (28) having dropped to a corresponding predefined lower limit.

13. Animal feed dispensing apparatus as claimed in any of Claims 10 to 12 **characterised in that** the dispenser (5) comprises a storage hopper (55) for storing an ingredient of a first one of the primary containers (28), the storage hopper (55) being adapted to feed the ingredient into the first one of the primary containers (28), and a storage silo (65) is provided for storing an ingredient for a second one of the primary containers (28), and a delivery means (70) is provided for delivering the ingredient from the storage silo (65) to the second primary container (28), the control means (48) being responsive to a signal from the primary level sensing means (63) of the second primary container (28) being indicative of the level of the ingredient in the second primary container (28) falling to a predefined lower level for operating the delivery means (70) to deliver the ingredient from the storage silo (65) to the second primary container (28).

14. Animal feed dispensing apparatus as claimed in 13 **characterised in that** the control means (48) is responsive to the signal produced by the primary level sensing means (63) of the first primary container (28) being indicative of the level of ingredient in the first primary container (28) having dropped to the corresponding predefined lower limit for producing a first reorder message, and for controlling the communicating means (85) to communicate the first reorder message to a remote communications device, and the storage silo (65) comprises a detecting means (81) for detecting the quantity of ingredient in the storage silo (65) having dropped to a predefined lower limit, and for producing a signal indicative of the quantity of the ingredient in the storage silo (65) having dropped to the predefined lower limit, the control means (48) being responsive to the signal produced by the detecting means (81) of the storage silo (65) being indicative of the quantity of the ingredient in the storage silo (65) having dropped to the predefined lower limit for producing a second reorder message, and for controlling the communicating means (85) to communicate the second reorder message to a remote communications device.

15. Animal feed dispensing apparatus as claimed in any preceding claim **characterised in that** the dispenser (5) comprises a feed accommodating element (22) for receiving each dispensed discrete predefined quantity of the animal feed for presenting the dispensed discrete predefined quantity of the animal feed to a corresponding animal.

16. A system for dispensing discrete predefined quantities of animal feed to respective animals, the system (1) comprising an animal feed dispensing apparatus (2) as claimed in any preceding claim, and a remote communications device (4) adapted to communicate with the animal feed dispensing apparatus (2) via the communicating means (85) thereof.

## Patentansprüche

1. Tierfutterausgabevorrichtung mit einem Tierfutterspender (5), einer Einrichtung (48) zum Zugreifen auf Daten, die nähere Angaben über zumindest diskrete vorbestimmte Tierfuttermengen zum Abgeben an entsprechende Tiere enthalten, einer Identifizierungseinrichtung (84), die die Identität eines sich dem Spender (5) nähernden Tieres zu bestimmen und ein die Identität des Tieres angebendes Identitätssignal zu erzeugen vermag, einer Ausgabeeinrichtung (34), die in Reaktion auf das Identitätssignal eine diskrete vorbestimmte Menge des Tierfutters aus dem Spender (5) entsprechend dem identifizierten Tier abzugeben vermag, **dadurch gekennzeichnet, dass** eine Überwachungseinrichtung (50) zum Überwachen der Ausgabeeinrichtung (34) vorhanden ist, wobei die Überwachungseinrichtung (50) auf ein Scheitern der Ausgabeeinrichtung (34), einen Teil oder die Gesamtheit der diskreten vorbestimmten Menge des Tierfutters auszugeben, ein Warnsignal erzeugt, und dass eine Kommunikationseinrichtung (85) vorhanden ist, wobei die Kommunikationseinrichtung (85) für einen wechselseitigen Informationsfluss und zum Übertragen des Warnsignals an ein Fernkommunikationsgerät (4) ausgestaltet ist.

2. Tierfutterausgabevorrichtung nach Anspruch 1,
**dadurch gekennzeichnet, dass** die Kommunikationseinrichtung (85) eine drahtlose Übertragungseinrichtung (85) umfasst.

3. Tierfutterausgabevorrichtung nach Anspruch 1 oder 2,
**dadurch gekennzeichnet, dass** eine erste Speichereinrichtung (84) zum Speichern von Daten vorhanden ist, die die näheren Angaben der diskreten vorbestimmten Tierfuttermengen in Zuordnung zu den Identitäten der entsprechenden Tiere enthalten.

4. Tierfutterausgabevorrichtung nach Anspruch 3,
**dadurch gekennzeichnet, dass** eine Schnittstelleneinrichtung vorhanden ist zum Koppeln mit der ersten Speichereinrichtung (84), um ein Eingeben von Daten zu erleichtern, die nähere Angaben der diskreten vorbestimmten Tierfuttermengen in Zuordnung zu den Identitäten der entsprechenden Tiere enthalten, wobei die Schnittstelleneinrichtung dazu ausgeführt ist, durch die Kommunikationseinrichtung (85) mit einem entfernt angeordneten Computer zum Herunterladen der Daten zu kommunizieren, die nähere Angaben der diskreten vorbestimmten Tierfuttermengen in Zuordnung zu den Identitäten der entsprechenden Tiere enthalten.

5. Tierfutterausgabevorrichtung nach einem der vorhergehenden Ansprüche,
**dadurch gekennzeichnet, dass** die Einrichtung (48) zum Zugreifen auf die Daten, die nähere Angaben über die zumindest diskreten vorbestimmten Tierfuttermengen zum Abgeben an entsprechende Tiere enthalten, eine Steuereinrichtung (48) umfassen, und dass die Steuereinrichtung (48) auf das von der Identifizierungseinrichtung (82) erzeugte Identitätssignal anspricht, um einen Betrieb der Ausgabeeinrichtung (34) zum Abgeben der diskreten vorbestimmten Tierfuttermenge für das identifizierte Tier zu steuern.

6. Tierfutterausgabevorrichtung nach Anspruch 5,
**dadurch gekennzeichnet, dass** die Steuereinrichtung (48) auf das von der Überwachungseinrichtung (50) erzeugte Warnsignal anspricht, um die Kommunikationseinrichtung (85) dazu zu betreiben, das Warnsignal an das Fernkommunikationsgerät (4) zu übertragen.

7. Tierfutterausgabevorrichtung nach Anspruch 5 oder 6,
**dadurch gekennzeichnet, dass** die Steuereinrichtung (48) die Ausgabeeinrichtung (34) so zu steuern vermag, dass sie während einer vorbestimmten Zeitdauer nicht mehr als eine vorbestimmte Anzahl der entsprechenden diskreten vorbestimmten Tierfuttermengen an jedes Tier abgibt.

8. Tierfutterausgabevorrichtung nach Anspruch 7,
**dadurch gekennzeichnet, dass** eine zweite Speichereinrichtung (88) vorhanden ist, wobei die zweite Speichereinrichtung (88) Daten zu speichern vermag, die die Identität jedes Tieres enthalten, an das während jeder vorgegebenen Zeitdauer die entsprechende diskrete vorbestimmte Tierfuttermenge abgegeben wird, und dass die Steuereinrichtung (48) die Kommunikationseinrichtung (85) dazu zu betreiben vermag, an ein Fernkommunikationsgerät (4) einen Bericht mit in der zweiten Speichereinrichtung (88) gespeicherten Daten zu übertragen, die die Identität jedes Tieres enthalten, an das während jeder vorbestimmten Zeitdauer eine entsprechende diskrete vorbestimmte Menge des Tierfutters abgegeben wird.

9. Tierfutterausgabevorrichtung nach Anspruch 8,
**dadurch gekennzeichnet, dass** die Daten, die nähere Angaben der diskreten vorbestimmten Tierfuttermengen enthalten, nähere Angaben hinsichtlich der Inhaltsstoffe und ihrer Anteile für die entsprechenden diskreten vorbestimmten Mengen des Tierfutters umfassen, und dass die zweite Speichereinrichtung (88) Daten zu speichern vermag, die nähere Angaben der Anteile der Inhaltsstoffe in jeder diskreten vorbestimmten Menge des Tierfutters enthalten, die während jeder vorbestimmten Dauer in Zuordnung zu der Identität des Tieres an jedes Tier abgegeben wird.

10. Tierfutterausgabevorrichtung nach einem der vorhergehenden Ansprüche,
**dadurch gekennzeichnet, dass** der Spender (5) wenigstens zwei Hauptbehälter (28) aufweist, die einen hohlen Innenbereich (29) zum Aufbewahren entsprechender der Inhaltsstoffe des Tierfutters festlegen, wobei die Ausgabeeinrichtung (34) jedes Hauptbehälters (28) eine in dem Hauptbehälter (28) angeordnete Hauptmesseinrichtung (34) umfasst, um den Inhaltsstoff aus dem Hauptbehälter (28) abzumessen, und wobei die Überwachungseinrichtung (50) eine jeder Hauptmesseinrichtung (34) zugehörige Hauptüberwachungseinrichtung (50) aufweist, um die entsprechende der Hauptmesseinrichtungen (34) zu überwachen.

11. Tierfutterausgabeeinrichtung nach Anspruch 10,
**dadurch gekennzeichnet, dass** jede Hauptmesseinrichtung (34) eine von einem zugehörigen, elektrisch angetriebenen Hauptmotor (42) angetriebene Hauptschnecke (34) aufweist, wobei jede Hauptschnecke (34) ein langgestrecktes Hauptförderrohr (32) umfasst, welches eine sich durch es hindurch erstreckende Förderbohrung (33) mit kreisförmigem Querschnitt festlegt, und eine in der Förderbohrung (33) drehbare Schneckenwendel (39), um einen Inhaltsstoff durch sie hindurch von einem stromaufwärtigen Ende (35) der Förderbohrung (33) zu einem stromabwärtigen Ende (36) derselben zu drängen, wobei zum stromaufwärtigen Ende (35) derselben eine Einlassöffnung (40) in dem Hauptförderrohr (32) ausgebildet ist und eine Auslassöffnung (31) aus dem Hauptförderrohr (32) nahe dem stromabwärtigen Ende (36) derselben vorhanden ist, und mit einem Absperrelement (45), welches zum wahlweisen Absperren der Hauptschnecke (34) von dem hohlen Innenbereich (29) des zugehörigen Hauptbehälters (28) ausgeführt ist, wobei das Hauptförderrohr (32) jeder Hauptschnecke (34) in dem hohlen Innenbereich (29) des zugehörigen Hauptbehälters (28) angeordnet und die Einlassöffnung (40) dazu ausgeführt ist, den Inhaltsstoff aus dem Hauptbehälter (28) unter Schwerkrafteinwirkung in das Hauptförderrohr (32) aufzunehmen.

12. Tierfutterausgabevorrichtung nach Anspruch 10 oder 11,
**dadurch gekennzeichnet, dass** jeder Hauptbehälter (28) eine Hauptniveausensiereinrichtung (62) aufweist, die das Niveau des Inhaltsstoffes in dem zugehörigen Hauptbehälter (28) zu erfassen vermag, wenn es auf einen zugehörigen vorbestimmten unteren Grenzwert gefallen ist.

13. Tierfutterausgabevorrichtung nach einem der Ansprüche 10 bis 12,
**dadurch gekennzeichnet, dass** der Speicher (5) ein Aufbewahrungstrichter (55) zum Aufbewahren eines Inhaltsstoffes eines ersten der Hauptbehälter (28) aufweist, wobei der Aufbewahrungstrichter (55) dazu ausgeführt ist, den Inhaltsstoff in den ersten der Hauptbehälter (28) zu speisen, und dass ein Aufbewahrungssilo (65) vorhanden ist zum Aufbewahren eines Inhaltsstoffes für einen zweiten der Hauptbehälter (28) und eine Zuführeinrichtung (70) vorhanden ist, um den Inhaltsstoff aus dem Speichersilo (65) dem zweiten Hauptbehälter (28) zuzuführen, wobei die Steuereinrichtung (48) auf ein Signal der Hauptniveausensiereinrichtung (63) des zweiten Hauptbehälters (28) anspricht, welches angibt, dass das Niveau des Inhaltsstoffes in dem zweiten Hauptbehälter (28) auf ein vorbestimmtes unteres Niveau fällt, um die Zuführeinrichtung (70) dazu zu betreiben, den Inhaltsstoff aus dem Speichersilo (65) dem zweiten Hauptbehälter (28) zuzuführen.

14. Tierfutterausgabevorrichtung nach Anspruch 13,
**dadurch gekennzeichnet, dass** die Steuereinrichtung (48) auf das von der Hauptniveausensiereinrichtung (63) des ersten Hauptbehälters (28) erzeugte Signal anspricht, welches angibt, dass das Niveau des Inhaltsstoffes in dem ersten Hauptbehälter auf den zugehörigen vorbestimmten unteren Grenzwert gefallen ist, um eine erste Nachbestellungsnachricht zu erzeugen, und um die Kommunikationseinrichtung (85) dazu anzusteuern, die erste Nachbestellungsnachricht an ein Fernkommunikationsgerät zu übertragen, und dass das Speichersilo (65) eine Erfassungseinrichtung (81) aufweist, um zu ermitteln, dass die Menge des Inhaltsstoffes in dem Speichersilo (65) auf einen vorbestimmten unteren Grenzwert gefallen ist, und um ein Signal zu erzeugen, welches angibt, dass die Menge des Inhaltsstoffes in dem Speichersilo (65) auf den vorbestimmten unteren Grenzwert gefallen ist, wobei die Steuereinrichtung (48) auf das von der Erfassungseinrichtung (81) des Speichersilos (65) erzeugte Signal anspricht, welches angibt, dass die Menge des Inhaltsstoffes in dem Speichersilo (65) auf den vorbestimmten unteren Grenzwert gefallen ist, um eine zweite Nachbestellungsnachricht zu erzeugen, und um die Kommunikationseinrichtung (85) dazu anzusteuern, die zweite Nachbestellungsnachricht an ein Fernkommunikationsgerät zu übertragen.

15. Tierfutterausgabevorrichtung nach einem der vorhergehenden Ansprüche,
**dadurch gekennzeichnet, dass** der Spender (5) ein Futteraufnahmebauteil (22) zum Aufnehmen jeder abgegebenen diskreten vorbestimmten Menge des Tierfutters aufweist, um die abgegebene diskrete vorbestimmte Tierfuttermenge einem entsprechenden Tier darzubieten.

16. System zum Ausgeben diskreter vorbestimmter Tierfuttermengen an zugehörige Tiere, wobei das System (1) eine Tierfutterausgabevorrichtung (2) nach einem der vorhergehenden Ansprüche und ein Fernkommunikationsgerät (4) umfasst, das mit der Tierfutterausgabevorrichtung (2) über ihre Kommunikationseinrichtung (85) zu kommunizieren vermag.

## Revendications

1. Appareil de distribution d'aliments pour animaux comprenant un distributeur d'aliments pour animaux (5), un moyen d'accès aux données contenant des particularités dont au moins les quantités discrètes prédéfinies d'aliments pour animaux à distribuer aux animaux respectifs, un moyen d'identification (84) adapté à déterminer l'identité d'un animal approchant le distributeur (5) et à produire un signal d'identité indiquant l'identité de l'animal, un moyen de distribution (34) adapté à la distribution par le distributeur (5) d'une quantité discrète prédéfinie de l'aliment pour animaux appropriée à l'animal identifié en réponse au signal d'identité, **caractérisé par le fait qu'**un moyen de surveillance (50) est fourni pour surveiller le moyen de distribution (34), le moyen de surveillance (50) répondant à la défaillance du moyen de distribution (34) pour distribuer une partie ou la totalité d'une quantité discrète prédéfinie d'aliments pour animaux afin de produire un signal d'alerte et qu'un moyen de communication (85) est fourni, le moyen de communication (85) étant adapté à des communications bidirectionnelles et à communiquer un signal d'alerte à un dispositif de communication à distance (4).

2. Appareil de distribution d'aliments pour animaux selon la revendication 1, **caractérisé par le fait que** le moyen de communication (85) comprend un moyen de transmission sans fil (85).

3. Appareil de distribution d'aliments pour animaux selon la revendication 1 ou 2, **caractérisé par le fait qu'**un premier moyen de stockage (84) est fourni pour stocker les données contenant les particularités de quantités discrètes prédéfinies d'aliments pour animaux avec une référence croisée avec les identités des animaux respectifs.

4. Appareil de distribution d'aliments pour animaux selon la revendication 3, **caractérisé par le fait qu'**un moyen d'interface est fourni pour l'interface avec le premier moyen de stockage (84) pour faciliter l'entrée de données contenant des particularités de quantités discrètes prédéfinies d'aliments pour animaux avec une référence croisée avec les identités des animaux respectifs, le moyen d'interface étant adapté à la communication à travers le moyen de communication (85) avec un ordinateur à distance pour télécharger les données contenant les particularités des quantités discrètes prédéfinies d'aliments pour animaux avec une référence croisée avec les identités des animaux respectifs.

5. Appareil de distribution d'aliments pour animaux selon une quelconque des revendications précédentes, **caractérisé par le fait que** le moyen (48) d'accès aux données contenant au moins les particularités des quantités discrètes prédéfinies d'aliments pour animaux pour la distribution aux animaux respectifs comprend un moyen de contrôle (48) et que le moyen de contrôle (48) répond au signal d'identité produit par le moyen d'identification (82) pour le contrôle du fonctionnement du moyen de distribution (34) pour distribuer la quantité discrète prédéfinie de l'aliment pour animaux à l'animal identifié.

6. Appareil de distribution d'aliments pour animaux selon la revendication 5, **caractérisé par le fait que** le moyen de contrôle (48) répond au signal d'alerte produit par le moyen de surveillance (50) pour commander le moyen de communication (85) afin de communiquer le signal d'alerte au dispositif de communication à distance (4).

7. Appareil de distribution d'aliments pour animaux selon la revendication 5 ou 6, **caractérisé par le fait que** le moyen de contrôle (48) est adapté à contrôler le moyen de distribution (34) pour ne pas distribuer davantage qu'un nombre prédéfini de quantités discrètes prédéfinies d'aliments pour animaux à chaque animal pendant une période de temps prédéfinie.

8. Appareil de distribution d'aliments pour animaux selon la revendication 7, **caractérisé par le fait qu'**un second moyen de stockage (88) est fourni, le second moyen de stockage (88) étant adapté à stocker des donner contenant l'identité de chaque animal auquel la quantité discrète prédéfinie correspondante d'aliments pour animaux est distribuée durant chaque période de temps prédéfinie, et le moyen de contrôle (48) est adapté à commander le moyen de communication (85) pour communiquer à un dispositif de communication à distance (4) un rapport qui comprend les données stockées dans le second moyen de stockage (88) contenant l'identité de chaque animal auquel une quantité discrète prédéfinie correspondante d'aliments pour animaux est distribuée durant chaque période de temps prédéfinie.

9. Appareil de distribution d'aliments pour animaux selon la revendication 8, **caractérisé par le fait que** les données contenant les particularités des quantités discrètes prédéfinies d'aliments pour animaux contiennent les particularités des ingrédients et leurs proportions pour les quantités discrètes prédéfinies respectives d'aliments pour animaux, et le second moyen de stockage (88) est adapté à stocker les données contenant les particularités des proportions des ingrédients dans chaque quantité discrète prédéfinie de l'aliment pour animaux distribuée à chaque animal durant chaque période prédéfinie avec une référence croisée avec l'identité de l'animal.

10. Appareil de distribution d'aliments pour animaux selon une quelconque des revendications précédentes, **caractérisé par le fait que** le distributeur (5) comprend au moins deux conteneurs primaires (28) définissant une zone intérieure creuse (29) pour le stockage des ingrédients respectifs de l'aliment pour animaux, le moyen de distribution (34) de chaque conteneur primaire (28) comprenant un moyen de mesure primaire (34) logé dans le conteneur primaire (28) pour mesurer l'ingrédient depuis le conteneur primaire (28), et que le moyen de surveillance (50) comprend un moyen de surveillance primaire (50) associé à chaque moyen de mesure primaire (34) pour surveiller le moyen de mesure primaire (34) correspondant.

11. Appareil de distribution d'aliments pour animaux selon la revendication 10, **caractérisé par le fait que** chaque moyen de mesure primaire (34) comprend une vis d'alimentation primaire (34) entraînée par un moteur électrique primaire (42) correspondant, chaque vis d'alimentation primaire (34) comprenant un tube de transport primaire (32) longitudinal définissant un trou de transport (33) d'une section de coupe transversale circulaire s'étendant à travers celui-ci et une raclette de transport (39) rotative dans le trou de transport (33) pour pousser un ingrédient à travers celui-ci depuis une extrémité située en amont (35) du trou de transport (33) jusqu'à une extrémité en aval (36) de celui-ci, une ouverture d'entrée (40) étant formée par le tube de transport primaire (32) vers l'extrémité en amont (35) de celui-ci et une ouverture de sortie (41) étant fournie par le tube de transport primaire (32) adjacent à l'extrémité en aval (36) de celui-ci et un élément de fermeture (45) adapté à isoler de façon sélective la vis d'alimentation primaire (34) de la zone intérieure creuse (29) du conteneur primaire (28) correspondant, le tube de transport primaire (32) de chaque vis d'alimentation primaire (34) étant logé dans la zone intérieure creuse (29) du conteneur primaire (28) correspondant avec une ouverture d'entrée (40) adaptée à recevoir l'ingrédient du conteneur primaire (28) dans le tube de transport primaire (32) par gravité.

12. Appareil de distribution d'aliments pour animaux selon la revendication 10 ou 11, **caractérisé par le fait que** chaque conteneur primaire (28) comprend un capteur de niveau primaire (63) adapté à détecter que le niveau de l'ingrédient dans le conteneur primaire (28) correspondant est tombé à une limite inférieure prédéfinie correspondante.

13. Appareil de distribution d'aliments pour animaux selon les revendications 10 à 12, **caractérisé par le fait que** le distributeur (5) comprend une trémie régulatrice (55) pour le stockage d'un ingrédient dans un premier des conteneurs primaires (28), la trémie régulatrice (55) étant adaptée à alimenter le premier des conteneurs primaires (28) avec l'ingrédient, et un silo de stockage (65) est fourni pour stocker un ingrédient pour un deuxième des conteneurs primaires (28), et un moyen de distribution (70) est fourni pour distribuer l'ingrédient depuis le silo de stockage (65) au second conteneur primaire (28), le moyen de contrôle (48) répondant à un signal du capteur de niveau primaire (63) du second conteneur primaire (28) indiquant que le niveau de l'ingrédient dans le second conteneur primaire (28) tombe à un niveau bas prédéfini pour commander le moyen de distribution (70) pour distribuer l'ingrédient du silo de stockage (65) au second conteneur primaire (28).

14. Appareil de distribution d'aliments pour animaux selon la revendication 13, **caractérisé par le fait que** le moyen de contrôle (48) répond à un signal produit par le capteur de niveau primaire (63) du premier conteneur primaire (28) indiquant que le niveau d'ingrédient dans le premier conteneur primaire (28) est tombé à la limite inférieure prédéfinie correspondante pour produire un premier message de réapprovisionnement et pour commander le moyen de communication (85) pour communiquer le premier message de réapprovisionnement à un dispositif de communication à distance et qu'un silo de stockage (65) comprend un moyen de détection (81) pour détecter que la quantité d'ingrédient dans le silo de stockage (65) est tombée à une limite inférieure prédéfinie, et pour produire un signal indiquant que la quantité de l'ingrédient dans le silo de stockage (65) est tombée à une limite inférieure prédéfinie, le moyen de contrôle (48) répondant au signal produit par le moyen de détection (81) du silo de stockage (65) indiquant que la quantité de l'ingrédient dans le silo de stockage est tombée à une limite inférieure prédéfinie pour produire un second message de réapprovisionnement et pour commander le moyen de communication (85) pour communiquer le second message de réapprovisionnement à un dispositif de communication à distance.

15. Appareil de distribution d'aliments pour animaux selon une quelconque des revendications précédentes, **caractérisé par le fait que** le distributeur (5) comprend un élément de réception d'aliments (22) pour recevoir chaque quantité discrète prédéfinie distribuée de l'aliment pour animaux pour donner la quantité discrète prédéfinie distribuée d'aliments pour animaux à l'animal correspondant.

16. Un système de distribution de quantités discrètes prédéfinies d'aliments pour animaux aux animaux respectifs, le système (1) comprenant un appareil de distribution d'aliments pour animaux (2) selon une quelconque des revendications précédentes et un dispositif de communication à distance (4) adapté à la communication avec l'appareil de distribution d'aliments pour animaux (2) à travers le moyen de communication (85) de celui-ci.
